# EUROPÄISCHE PATENTSCHRIFT

(11) **EP 3 455 280 B1**
(45) Veröffentlichungstag und Bekanntmachung des Hinweises auf die Patenterteilung: **24.08.2022**
(21) Anmeldenummer: 17722419.3
(22) Anmeldetag: 05.05.2017
(51) Int. Cl.: C08G 73/02, C08G 12/32, C08L 61/28, C08L 79/02

(54) **IMPRÄGNIERHARZ-ZUSAMMENSETZUNG, HARZBESCHICHTUNG, DIESE ENTHALTENDE LAMINATE UND IMPRÄGNATE SOWIE VERFAHREN ZU DEREN HERSTELLUNG**
IMPREGNATING RESIN COMPOSITION, RESIN COATING, LAMINATE CONTAINING SAME, IMPREGNATION PRODUCT, AND METHOD FOR PRODUCING SAME
COMPOSITION DE RÉSINE D'IMPRÉGNATION, REVÊTEMENT RÉSINEUX, STRATIFIÉS ET PRODUITS IMPRÉGNÉS CONTENANT LADITE COMPOSITION OU LEDIT REVÊTEMENT

(30) Priorität: 09.05.2016 DE 102016108549
(43) Veröffentlichungstag der Anmeldung: 20.03.2019
(73) Patentinhaber: Fritz Egger GmbH & Co. OG, 6380 St. Johann in Tirol (AT)
(72) Erfinder: GEYER, Andreas, 3500 Krems (AT); HEINRICH, Holger, 23970 Benz (DE)
(74) Vertreter: Cohausz & Florack
(86) Internationale Anmeldenummer: PCT/EP2017/060746
(87) Internationale Veröffentlichungsnummer: WO 2017/194397

(56) Entgegenhaltungen:
- EP-A1- 2 230 258
- WO-A1-00/18577

## Beschreibung

Die Erfindung betrifft eine Imprägnierharz-Zusammensetzung sowie eine Harzbeschichtung. Ein weiterer Gegenstand der Erfindung ist ein Imprägnat enthaltend die Imprägnierharz-Zusammensetzung Ferner betrifft die Erfindung ein Laminat enthaltend eine Harzbeschichtung sowie Verfahren zu deren Herstellung. Ferner betrifft die Erfindung auch die Verwendung der Imprägnierharz-Zusammensetzung in der Holzwerkstoff-, Imprägnat- und/oder Laminatherstellung oder die Verwendung der Harzbeschichtung in der Holzwerkstoff und/oder Laminatherstellung.

Imprägnierharze werden vor allem für Laminate und/oder Imprägnate in der holz- und papierverarbeitenden Industrie verwendet. "Imprägnierharz", wie hier verwendet, ist dabei gleichbedeutend mit dem vom Fachmann ebenfalls benutzten Ausdruck "Tränkharz". Imprägnierharze dienen zum Imprägnieren, Tränken und/oder Beschichten von Trägermaterialien wie beispielsweise von Dekorpapieren oder Holzwerkstoffen bei der Laminatherstellung. Imprägnierharze können von dem Trägermaterial ganz oder teilweise aufgesogen und/oder in Form einer Schicht auf oder in diesem vorliegen. Ein Beispiel für ersteres ist ein imprägniertes Overlaypapier, ein Beispiel für letzteres ist ein sogenanntes Flüssig-Overlay.

Imprägnierharze finden vor allem in der Laminatherstellung Anwendung. Laminate, wie sie beispielsweise als Fußbodenpaneele oder in der Möbelherstellung verwendet werden, weisen üblicherweise einen schichtweisen Aufbau auf, wobei die oberste Typischerweise werden Schicht meist aus einer Schicht, die ein Imprägnierharz enthält, besteht. Typischerweise werden für diese obersten Laminatschichten sind-Imprägnate, wie Overlay- oder r Dekorpapiere, die mit einem Imprägnierharz imprägniert Imprägnate Die oberste Schicht kann eine eigens aufgetragene Schicht Imprägnierharz, beispielsweise in Form eines sogenannten Flüssig-Overlays, sein. Overlaypapier und Flüssig-Overlay Schichten sind, verwendet. dienen dem Schutz der Oberfläche vor äußeren Einflüssen wie Abnutzung und Verkratzung. Neben diesen mechanischen Eigenschaften müssen Imprägnierharze, dadurch dass sie als oberflächlichste Schicht aufgetragen werden, höchsten optischen Anforderungen, vor allem die Transparenz betreffend, genügen. Oftmals befindet sich vom Endbenutzer aus betrachtet unterhalb des Imprägnierharzes das eigentliche Dekor des Laminats, welches uneingeschränkt sichtbar, gleichmäßig und farbecht erscheinen soll.

Die wirtschaftlich bedeutendsten Imprägnierharze sind Aminoplastharze und dort insbesondere die Melamin-Formaldehyd-Harze. Aminoplastharze sind sehr vielseitige Kunststoffe, die in den unterschiedlichsten Zusammensetzungen und Formen eingesetzt werden. Dem in der holz- und papierverarbeitenden Industrie tätigen Fachmann sind Aminoplastharze neben dem Imprägnieren, Tränken und/oder Beschichten von Oberflächen vor allem auch als Leime, z.B. für die Spanplattenherstellung, allgemein bekannt Wiederum gänzlich andere Aminoplastharze kommen bei der Herstellung von Formkörpern aus Hartplastik, beispielsweise Melamin-Kochgeschirr, zum Einsatz. Aminoplastharze bzw. Aminoplaste werden in "Ullmanns Enzyklopädie der technischen Chemie", 4. Auflage, 1974, im Kapitel "Aminoplaste" in Band 7 oder in "Holzwerkstoffe und Leime" von Dunky und Niemz, 1. Auflage, 2002, in Band I, Teil II, Kapitel 1 beschrieben. Unter dem Begriff Aminoplaste versteht man allgemein Kondensationsprodukte, die durch Umsetzung einer Carbonylverbindung, in der Praxis meist Formaldehyd, mit einer Amino-, Imino- oder Amidgruppen enthaltenden Komponente erhalten werden.

Bei den in der holz- und papierverarbeitenden Industrie als Imprägnierharz verwendeten Aminoplastharzen handelt es sich häufig um Aminoplast-Vorkondensate, deren Methylolgruppen unverethert oder mit Alkoholen teilweise verethert sind. Wirtschaftlich am bedeutendsten sind in diesem Zusammenhang Harnstoff-Melamin-Formaldehyd-Harze sowie Melamin-Formaldehyd-Harze. Insbesondere bei den oben erwähnten, als oberste Schicht in der Laminatherstellung verwendeten Imprägnierharzen kommen wegen der hohen mechanischen und optischen Anforderungen vornehmlich Melamin-Formaldehyd-Harze zum Einsatz.

Melamin-Formaldehyd-Harze sowie deren Herstellung bzw. Kondensation oder Aushärtung sowie Modifizierungen sind dem Fachmann allgemein bekannt und in "Holzwerkstoffe und Leime" von Dunky und Niemz, 1. Auflage, 2002, in Band I, Teil II, Kapitel 1 beschrieben. Melamin-Formaldehyd-Harze werden aus Melamin und Formaldehyd unter Verwendung von Härtern hergestellt. Als Zwischenprodukt werden Hydroxymethylolmelamine (Hexamethylolverbindungen) durch Addition von Formaldehyd an Melamin in Suspensionen oder wässriger Lösung gewonnen. Je nach Menge an Formaldehyd bilden sich Tri- bis hin zu Hexa-Hydroxymethylolmelamine. Diese Reaktionsschritte sind schematisch in dem folgenden Reaktionsschema 1 dargestellt:

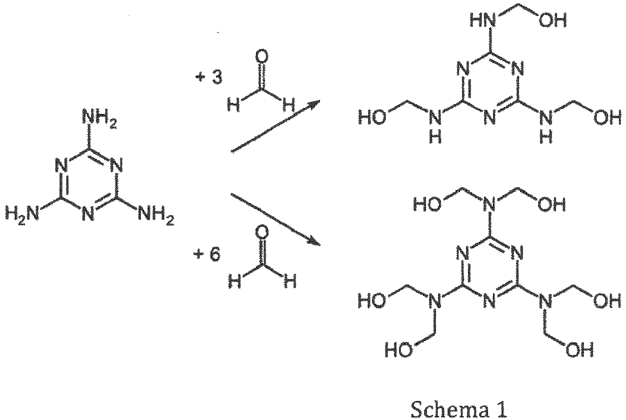

Diese Vorstufen sind lagerfähig und werden - wie auch weiter fortgeschrittene Kondensationsstufen (siehe unten) - vom Fachmann auch als "Vorkondensate" bezeichnet.

Unter Druck und/oder erhöhter Temperatur erfolgt ausgehend von den Vorkondensaten eine weitere (oder auch bereits die vollständige) Kondensation bzw. Aushärtung des Aminoplasts. Diese kann abhängig von Druck und/oder Temperatur stufenweise erfolgen, so dass sich eine weitere Vorkondensatmischung bilden kann, die dann sowohl obige Hydroxymethylolmelamine also auch bereits (teil)-ausgehärtetes Melamin-Formaldehyd-Harz enthält. Die Kondensationsreaktionen führen zur Verknüpfung der Monomere über Ether- und Methylengruppen. Bei vollständiger Kondensation bzw. Aushärtung bildet sich ein engmaschig über Methylengruppen vernetzter Kunststoff. In Schema 2 ist beispielhaft ein vernetztes Melamin-Formaldehyd-Harz dargestellt, wobei die gestrichelten Linien die Fortsetzung des Makromoleküls andeuten.

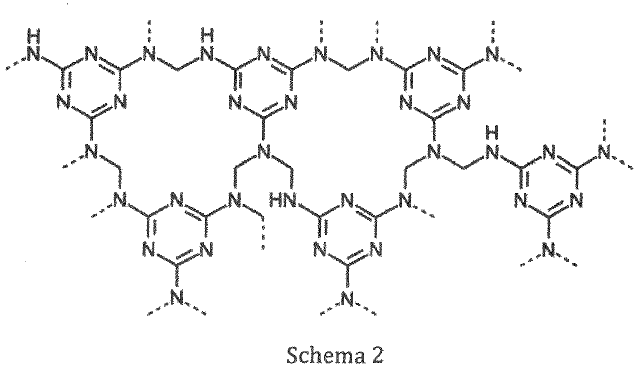

Aminoplaste werden in der Regel im wässrigen Medium hergestellt.

An Laminate, egal ob im Fußboden- oder Möbelbereich, und an die zu ihrer Herstellung verwendeten Imprägnierharze werden hohe Anforderungen gestellt. Diese sind beispielsweise in der DIN EN 13329 wiedergeben. Laminate müssen daher nicht nur gute Eigenschaften hinsichtlich ihrer Weiterverarbeitung aufweisen, sondern müssen aufgrund ihrer starken Beanspruchung, vor allem als Fußboden, an ihrer Oberseite eine hervorragende Kratz- und Abriebfestigkeit aufweisen. Diese ist beispielsweise in DIN EN 13329 festgelegt und kann mittels eines modifizierten Martindale Tests, einem genormten Prüfverfahren zur Bestimmung der Mikrokratzbeständigkeit bei Laminatböden (DIN EN ISO 12947:04/1999 bzw. IHD W-445, Version Mai 2007), bestimmt werden. Um die Oberflächenbeständigkeit von Laminat und/oder Holzwerkstoffen zu erhöhen, ist es bekannt, die Dekor- und/oder Overlaypapiere bzw. die Oberfläche des Holzwerkstoffs noch mit einer eigens aufgetragenen Schicht, beispielsweise in Form eines sogenannten transparenten Flüssig-Overlays oder Overlayfilms, zu beschichten.

Weitere Anforderungen an die oberste Schicht des Laminats, die üblicherweise Imprägnierharz enthält oder hieraus besteht, sind die oben bereits beschriebenen optischen Eigenschaften, wie hohe Transparenz, Licht- und Farbechtheit, optische Güte sowie gewollte optische Effekte wie Glanz oder Mattheit der Oberfläche.

Die gleichzeitige Erfüllung dieser mechanischen (z.B. Härte, Abriebfestigkeit, Kratzfestigkeit und/oder Abnutzungsbeständigkeit) und optischen Anforderungen ist bei der Wahl des Imprägnierharzes eine große Herausforderung. In der Praxis werden diese noch am besten von auf Melamin-Formaldehyd-Harz basierenden Imprägnierharz-Zusammensetzungen erzielt, die als weitere Komponenten Netzmittel, Trennmittel und Härter enthalten.

Diese Art hochqualitative Imprägnierharz-Zusammensetzungen, enthaltend Melamin-Formaldehyd-Harz, Netzmittel, Trennmittel und Härter, weiter zu verbessern, ist Gegenstand der vorliegenden Erfindung. Derartige Imprägnierharz-Zusammensetzungen werden nachfolgend auch "gattungsgemäße Imprägnierharz-Zusammensetzungen" genannt.

Gattungsgemäße Imprägnierharz-Zusammensetzungen, wie sie vornehmlich bei der Laminat- oder Imprägnatherstellung eingesetzt werden, unterscheiden sich folglich in ihrer chemischen Zusammensetzung sowie ihren Eigenschaften und Anforderungen deutlich von anderen Aminoplastharzen, wie sie unter anderem in Leimen, Farben oder Hartplastik-Polymermischung, beispielsweise Melaminplastik für Kochgeschirr, eingesetzt werden.

Gattungsgemäße Imprägnierharz-Zusammensetzungen, wie hier verwendet, weisen immer als zwingende Bestandteile Melamin-Formaldehyd-Harz, Netzmittel, Trennmittel und Härter auf. Hierdurch unterscheiden sich die gattungsgemäßen Imprägnierharz-Zusammensetzungen schon rein chemisch von Melaminharzplastik und auch aminoplastbasierenden Leimen, welche keine Kombination aus Netzmittel, Trennmittel und Härter enthalten. Die typischen Melaminharz-basierten Leime oder Melaminharz-Plastikwerkstoffe weisen auch nicht die für die bei der Laminat- oder Imprägnatherstellung zum Einsatz kommenden Imprägnierharze erforderlichen mechanischen und optischen Eigenschaften auf.

Im Stand der Technik lag der Fokus bei gattungsgemäßen Imprägnierharz-Zusammensetzungen bislang auf der Optimierung der optischen und mechanischen Oberflächeneigenschaften. Eine Oberflächeneigenschaft, die bei Imprägnierharzen bislang zum einen keine große Rolle gespielt hat, für die der Stand der Technik aber auch keine zufriedenstellende Lösung bereitstellt, sind antimikrobielle Eigenschaften.

Grundsätzlich besteht jedoch eine hohe Nachfrage an Oberflächen mit antimikrobiellen Eigenschaften. Dies gilt sowohl für Laminate, die im Fußboden- und/oder Möbelbereich eingesetzt werden als auch für solche, die in Bereichen eingesetzt werden, an die höhere hygienische Anforderungen gestellt werden. Speziell für stark beanspruchte Oberflächen mit erhöhten hygienischen Anforderungen, z.B. im medizinischen und öffentlichen Bereich, aber auch in Laboratorien, Küchen sowie im Sanitär- und Wohnbereich sind antimikrobielle Oberflächen im Hinblick auf die Gesundheit und Lebensqualität der Benutzer wünschenswert und können helfen, Kontaminationen und Infektionen zu vermeiden. Dies trifft auch für besondere Feuchtigkeit ausgesetzten Oberflächen, z.B. in Dach-, Keller- oder Wandbereichen, zu.

Vor diesem Hintergrund ist es erstrebenswert, verbesserte Imprägnierharz-Zusammensetzungen und daraus hergestellte Imprägnierharz-Schichten, Imprägnate und Laminate, bereitzustellen, deren Oberflächen eine erhöhte Beständigkeit gegenüber Mikroorganismen aufweisen, ohne dass es hierdurch zu einer Beeinträchtigung der im Stand der Technik bereits erzielbaren hervorragenden optischen und mechanischen Eigenschaften käme.

Zur Vermeidung bzw. Verringerung von mikrobiellem Befall wurde im Stand der Technik grundsätzlich bereits der Versuch unternommen verschiedene Substanzen mit antimikrobieller, biozider bzw. fungizider Wirkung bei der Laminatherstellung einzusetzen. Chemikalien, die den Befall durch holzzerstörende und -verfärbende Pilze oder Insekten verhindern (vorbeugender Holzschutz) bzw. im Falle eines bereits eingetretenen Befalls Schadorganismen abtöten (bekämpfender Holzschutz) sollen, enthalten in der Regel stets Biozide als wirksame Bestandteile. Biozide sind in der Biozid-Verordnung (EU) Nr. 528/2012 klassifiziert.

So sind aus dem Stand der Technik vereinzelte Biozide und Additive zur antimikrobiellen Ausstattung von Aminoplastharzen im Allgemeinen bekannt. Für die antimikrobielle Ausstattung speziell von gattungsgemäßen Imprägnierharz-Zusammensetzungen, die neben Melamin-Formaldehyd-Harz noch mindestens Netzmittel, Trennmittel und Härter enthalten, und die oben genannten mechanischen und optischen Eigenschaften zufriedenstellend erfüllen, gibt es im Stand der Technik jedoch keine Lösungen oder Hinweise.

Die JP 08073702 A beschreibt beispielsweise antibakterielle Melaminharze, die eine Mischung von Aluminium-, Magnesium- und Siliziumoxiden sowie elementares Silber und Zink als antibakteriellen Wirkstoff enthalten. Damit konnten antibakterielle Eigenschaften für bis zu 48 Stunden erreicht werden. Der Nachteil dieser Lösung ist die nur kurz andauernde antibakterielle Eigenschaft und die große Anzahl an notwendigen antibakteriellen Einzelkomponenten. Je mehr Einzelkomponenten einem Melaminharz zugegeben werden, umso schwieriger ist es, alle Bestandteile der Harzflotte mengenmäßig optimal und ohne Beeinträchtigung hinsichtlich der gewünschten mechanischen und optischen Eigenschaften aufeinander abzustimmen.

Die WO 03/009827 A1 beschreibt Melaminharze, die eine Mischung aus einem Diphenyletherderivat und Orthophenylphenol als antimikrobielle Komponenten enthalten. Nachteilig an diesen Additiven ist, dass sie leicht von der Harzoberfläche ausgewaschen werden, so dass die antibakterielle Wirkung mit der Zeit abnimmt und Chemikalien an die Umwelt abgegeben werden.

Die US 6248342 B1 beschreibt antibakterielle Laminate, in deren melaminharzgetränkter Oberfläche eine anorganische, ein Metallion enthaltende antibakterielle Komponente eingearbeitet ist. Als antibakterielle Komponente werden bevorzugt Zeolite verwendet, welche Metallionen wie beispielsweise Ag, Cu, Zn, Hg, Sn, Pb, Bi, Cd, Cr oder Mischungen davon enthalten. Durch lonenaustauschprozesse gelangen die Metallionen an die Laminatoberfläche und ermöglichen so die antibakterielle Wirkung. Nachteilig hieran ist, dass die Metallionen in Oxide, Hydroxide oder sonstige Salze umgewandelt werden können und sich dann in dieser Form an der Laminatoberfläche absetzen, wo sie die antibakterielle Wirkung abschwächen. Aus gesundheitlicher Sicht ist auch der Einsatz der oben genannten Schwermetalle bedenklich.

Aufgrund der oben beschriebenen Nachteile können viele antimikrobielle Additive bzw. Holzschutzmittel, die biozide Substanzen enthalten, nicht optimal im Innenausbau verwendet werden. Weiterhin können die Biozide aufgrund ihrer potentiellen Emission durch Verdunstung, Abrieb oder durch anderweitige Freisetzung die Gesundheit von Menschen und deren Umwelt beeinträchtigen. Oftmals verlieren Biozide aber auch durch allmählichen (natürlichen) Abbau ihre Wirkung. Die wasserlöslichen oder wasserbasierten Biozid-enthaltenden Holzschutzmittel können beispielsweise mit der Zeit ausgewaschen werden, wodurch einerseits die antimikrobielle Eigenschaft der Oberfläche nachlässt und andererseits eine erhöhte Umweltbelastung auftreten kann.

Nachteilig an den bislang vorgeschlagenen Bioziden ist ferner, dass diese zum einen stark gesundheitsschädlich sind und sich zum andern schlecht in die bei der Faserplattenherstellung verwendeten Harze integrieren lassen und/oder mit diesen inkompatibel sind.

Der vorliegenden Erfindung ist eine umfangreiche Forschungstätigkeit vorausgegangen, bei der zahlreiche als antimikrobielle Additive in Frage kommende Stoffe in gattungsgemäßen Imprägnierharz-Zusammensetzungen getestet wurden. Hierbei sahen sich die Erfinder vor gravierende Probleme gestellt. Viele Additive verloren nach Aushärtung des Imprägnierharzes ihre antimikrobiellen Eigenschaften. Dies ließ sich zum einen durch Verlust der antimikrobiellen Struktureinheiten durch Abreaktion während der Kondensationsreaktion des Harzes erklären. Andere Additive erwiesen sich jedoch auch einfach nicht als genügend temperaturbeständig, um den bei der Imprägnat- und Laminatherstellung auftretenden hohen Press- und Trocknungstemperaturen standzuhalten. Einige Additive waren mit den üblichen Komponenten der gattungsgemäßen Imprägnierharze inkompatibel oder störten die Kondensationsreaktion, sodass eine Verschlechterung der mechanischen und/oder der optischen Eigenschaften des Imprägnierharzes die Folge war. Bei der Mehrzahl der getesteten Additive kam es nicht zu einer Verankerung in der Melamin-Formaldehydmatrix, wodurch die Additive in den fertigen Produkten mittels wässriger Flüssigkeiten oder der in gängigen Reinigungsmitteln vorhandenen organischen Lösungsmittel auswaschbar waren, was mit einer Abnahme der antimikrobiellen Oberflächeneigenschaften über die Zeit einherging.

Weiterhin gilt es im Sinne einer nachhaltigen Rohstoffnutzung, einen antimikrobiellen Wirkstoff zu finden, der sich nicht negativ auf die Qualität recyclingfähiger Materialien auswirkt. Die regelmäßig in transparenter Ausführung vorliegenden Imprägnierharzhaltigen Beschichtungen unterliegen zudem häufig direkter Sonneneinstrahlung. Ein geeigneter antimikrobieller Wirkstoff muss daher über eine ausreichende UV-Stabilität verfügen und darf zu keiner farblichen Beeinträchtigung führen.

Schließlich kommen bei der Verarbeitung marktüblicher gattungsgemäßer Imprägnierharz-Zusammensetzungen, je nach Produktanforderung, eine Vielzahl weiterer Additive zum Einsatz. Mit diesen muss der antimikrobielle Wirkstoff ebenfalls vollständig kompatibel sein, um eine Verschlechterung der Imprägnierharzeigenschaften zu vermeiden.

Um das Problem der Auswaschbarkeit zu adressieren, wurden auch andere Additive, bei denen es zu einer Einpolymerisation in die Melamin-Formaldehydmatrix kam, getestet. Diese verloren hierdurch jedoch vielfach ihre antimikrobiellen Eigenschaften und/oder beeinträchtigten die Netzwerkstruktur der Melamin-Formaldehydmatrix, was mit einer Verschlechterung der mechanischen und/oder der optischen Eigenschaften des Imprägnierharzes einherging.

Es wurden in diesem Zusammenhang insbesondere auch antimikrobielle Substanzen mit funktionalen Gruppen getestet, welche in der Lage sind, in die Melamin-Formaldehydmatrix gattungsgemäßer Imprägnierharz-Zusammensetzungen einzupolymerisieren. Gegenüber derartigen Mischkondensationsprodukten bestanden jedoch zu recht erheblich Bedenken. So stellt eine derartige antimikrobielle Funktionalisierung dekorativer Melaminharzbeschichtung an den einzusetzenden antimikrobiellen Wirkstoff sehr hohe Anforderungen. Es gilt hier besonders, die extremen Verarbeitungstemperaturen der Trocknungs- und Pressaggregate zu überstehen und andererseits die gewünschten und fein ausbalancierten mechanischen und optischen Eigenschaften der Imprägnierharze nicht nachteilig zu verändern. Weiterhin muss der antimikrobielle Wirkstoff mit dem Imprägnierharz mischbar sein, d.h. vorzugsweise wasserlöslich sein, in das Vorkondensat einkondensierbar sein und darf die anfängliche und abschließende Vernetzung der Melamin-Formaldehydmatrix nicht stören.

In der Vergangenheit wurden mit Mischkondensationsprodukten, wie beispielsweise Co-Kondensaten aus Melamin-Formaldehyd-Imprägnierharzen mit Harnstoff, schlechte Erfahrungen gemacht. Selbst eine Co-Polymerisation mit Harnstoff, führt zu einer unerwünschten Trübung und Verschlechterung der mechanischen Eigenschaften des Imprägnierharzes. Dies ist insofern bemerkenswert, als dass Harnstoff und Melamin strukturverwandt sind und zwischen diesen beiden Stoffen noch am ehesten eine Kompatibilität zu erwarten gewesen wäre. Dennoch genügten diese Harnstoff-Melamin-Formaldehyd Mischkondensationsprodukte nicht den hohen Anforderungen, die an Imprägnierharze gestellt werden.

Die Co-Polymerisation mit Harnstoff scheint zu einem inhomogeneren Harz zu führen, welches, wenn es ausgehärtet ist, weicher als reine Melamin-Formaldehydharze ist. Weiterhin zeigten diese Mischkondensationsprodukte auch nicht die gewünschte Transparenz. Ohne an eine wissenschaftliche Theorie gebunden sein zu wollen, scheint sich die Eintrübung dadurch erklären zu lassen, dass sich durch die Einpolymerisation des Harnstoffs "Störstellen" in der sonst gleichmäßigen Melamin-Formaldehydmatrix zu bilden scheinen, die einer homogenen Kondensation und damit Aushärtung bzw. Vernetzung des Harzes entgegenstehen. An diesen "Störstellen" ist das Harz wahrscheinlich nicht mehr dazu in der Lage, sich optimal weiter zu vernetzen und damit gleichmäßig auszuhärten. Insgesamt ist festzuhalten, dass es den Harnstoff-Melamin-Formaldehyd-Harzen an der geforderten Kombination aus mechanischer Festigkeit, d.h. Abriebfestigkeit und Kratzbeständigkeit, und der hochtransparenten und optisch ansprechenden Erscheinung mangelt. Aus diesem Grund werden beispielsweise bei der Laminatherstellung, zumindest für die oberste Schicht, die höchsten Anforderungen genügen muss, heute immer noch reine Melamin-Formaldehyd-Harze in den gattungsgemäßen Imprägnierharz-Zusammensetzungen eingesetzt.

Vor diesem Hintergrund bestanden gegenüber einpolymerisierbaren antimikrobiellen Additiven bereits Bedenken, die sich in praktischen Versuchen dann auch bestätigt haben. Ähnlich wie bei der Mischpolymerisation mit Harnstoff war es bei den getesteten einpolymerisierbaren antimikrobiellen Substanzen nicht möglich, antimikrobielle Oberflächen zu erzeugen ohne dass es zu Einbußen hinsichtlich der Transparenz und mechanischen Eigenschaften kam.

Bei der Suche nach einem antimikrobiellen Imprägnierharz bestand somit das Dilemma, dass der antimikrobielle Wirkstoff auf der einen Seite über einen langen Zeitraum aktiv bleiben und dafür über eine ausreichende Fixierung in der Oberfläche verfügen sollte, dabei aber wiederum seine antimikrobiellen Eigenschaften nicht verlieren und die mechanischen und optischen Eigenschaften gattungsgemäßer Imprägnierharz-Zusammensetzungen nicht stören darf. Eine kovalente Einbindung innerhalb der Formaldehyd-Melaminharzmatrix ist aufgrund der oben diskutierten Probleme daher genauso wünschenswert wie problematisch, v.a. im Hinblick auf die Erhaltung der mechanischen und optischen Eigenschaften des Imprägnierharzes.

Zusammenfassend kann festgehalten werden, dass gattungsgemäße Imprägnierharz-Zusammensetzungen ein vielfältiges Anforderungsprofil mit teilweise gegenläufigen Eigenschaften aufweisen, was bei der Suche nach einem geeigneten antimikrobiellen Wirkstoff zur Verwendung in diesen Imprägnierharz-Zusammensetzungen eine echte Herausforderung darstellt. Eine überzeugende Lösung für eine antimikrobielle Imprägnierharz-Zusammensetzung, die sich in der Praxis bei der Herstellung von Laminaten auch durchgesetzt hätte, ist bislang jedenfalls noch nicht vorgeschlagen worden.

Ausgehend von dem vorstehend erläuterten Stand der Technik und dessen Nachteilen bestand eine Aufgabe der Erfindung darin, eine Imprägnierharz-Zusammensetzung mit erhöhter Beständigkeit gegen Mikroorganismen bereitzustellen, ohne eine instabile, auswaschbare oder risikobehaftete Substanz verwenden zu müssen und ohne dass es zu einer Beeinträchtigung der mechanischen und optischen Eigenschaften der aus der Imprägnierharz-Zusammensetzung erhaltenen Oberflächen kommt. Ein weiterer Aspekt der der Erfindung zugrunde liegenden Aufgabe bestand darin, umweltfreundliche und gesundheitlich unbedenkliche Produkte bereitzustellen, deren Oberflächen sich durch eine langanhaltende Beständigkeit gegen Mikroorganismen auszeichnen.

Ferner war es eine Aufgabe der Erfindung, eine Imprägnierharz-Zusammensetzung aufzuzeigen, durch die ein ausreichender Schutz vor Mikroorganismen mit geringem Aufwand, insbesondere durch geringen Eintrag von Fremdstoffen in die Imprägnierharz-Zusammensetzung und/oder die daraus erhältlichen Oberflächen und geringer bis keiner Erhöhung der Herstellungskosten erreicht wird. Gleichzeitig sollte gewährleistet werden, dass die hohen Anforderungen an gattungsgemäße Imprägnierharz-Zusammensetzungen hinsichtlich der mechanischen Beständigkeit sowie optischen Eigenschaften der daraus erhältlichen Oberflächen weiterhin erfüllt werden.

Diese Aufgabe wird erfindungsgemäß durch die Imprägnierharz-Zusammensetzung nach Anspruch 1, die Harzbeschichtung nach Anspruch 6, das Imprägnat nach Anspruch 9, das Laminat nach Anspruch 12, das Verfahren nach Anspruch 15 sowie die Verwendung gemäß Anspruch 17 gelöst. Besondere Ausgestaltungen der Erfindung sind in den abhängigen Ansprüchen wiedergegeben.

Die erfindungsgemäße Imprägnierharz-Zusammensetzung enthält
a) ein Melamin-Formaldehyd-Harz,
b) ein nichtionisches Netzmittel,
c) ein nichtionisches Trennmittel,
d) einen Härter, und
e) Polyhexamethylenguanidin (PHMG).

Die Wörter "ein", "eine" oder "einen", wie hier oder an anderer Stelle verwendet, sind im Sinne von "mindestens ein", "mindestens eine" oder "mindestens einen" zu verstehen.

Überraschenderweise wurde gefunden, dass die erfindungsgemäße Imprägnierharz-Zusammensetzung die aus dem Stand der Technik bekannten Probleme überwindet. Aus der erfindungsgemäßen Imprägnierharz-Zusammensetzung erhältliche Oberflächen wirken langanhaltend antimikrobiell und genügen gleichzeitig den strengen Anforderungen an die mechanische Festigkeit sowie die Transparenz und das optischen Erscheinungsbild, obwohl die Imprägnierharz-Zusammensetzung zusätzlich Polyhexamethylenguanidin (PHMG) enthält.

Polyhexamethylenguanidin (PHMG) ist eine polymere Guanidin-Verbindung.

Wie eingangs erläutert wurden im Vorfeld der Erfindung in Versuchen unterschiedlichste Imprägnierharz-Zusammensetzung hergestellt und hinsichtlich ihrer mechanischen, optischen und auch antimikrobiellen Eigenschaften untersucht. Als antimikrobielle Substanzen wurden hierbei unter anderem Molybdän-Verbindungen, Silber-Ionen sowie Zinkoxid in reines Melamin-Formaldehydharz mit den üblichen Additiven, wie Härter sowie ionischen Netz- und Trennmittel, eingebracht. Dennoch zeigten diese Additive keine zufriedenstellenden Ergebnisse. Besonders die vorbezeichneten Metallionen wie Zink, Silber und Molybdän erfuhren durch die Bildung unlöslicher Verbindungen eine irreversible Inhibierung der antimikrobiellen Wirkung. Weitere Wirkstoffe setzten zur Entfaltung der antimikrobiellen Wirkung bzw. der Verarbeitung die Präsenz ausreichender Mengen von Wasser voraus, welches unter üblichen Einsatzbedingungen nicht vorhanden ist. Somit zeigte sich eine Wirkung dieser Biozide alleinig unter Prüfbedingungen, wie sie beispielsweise unter Anwendung der japanischen Normprüfung JIS Z 2801 vorliegen.

Auch das alleinige Untermischen polymerer Guanidin-Verbindungen, wie z.B. Polyhexamethylenguanidin (PHMG), zu einer Imprägnierharz-Zusammensetzung, die als Imprägnierharz Melamin-Formaldehydharz und die üblichen Härter sowie ionischen Netz- und Trennmittel enthielt, führte nicht zu den gewünschten Ergebnissen. Diese Imprägnierharz-Zusammensetzungen zeigten nach Aushärtung nur eine geringe bis gar keine antimikrobielle Aktivität. Weiterhin wurden auch die strengen Anforderungen an die mechanische Festigkeit und optische Erscheinung nicht erfüllt.

Überraschenderweise wurde herausgefunden, dass erst die erfindungsgemäße Imprägnierharz-Zusammensetzung, die eine Kombination von Polyhexamethylenguanidin (PHMG) mit nichtionischen Netz- und Trennmitteln vorsieht, die anvisierte antimikrobielle Aktivität über einen längeren Zeitraum aufwies und gleichzeitig die erforderlichen mechanischen und optischen Eigenschaften nicht beeinträchtigt wurden. Die spezielle Kombination der Komponenten a) bis e) der erfindungsgemäßen Imprägnierharz-Zusammensetzung ermöglicht damit erst die hervorragende Wirkung. Versuche haben ergeben, dass schon durch geringe Abweichungen von der erfindungsgemäßen Imprägnierharz-Zusammensetzung die guten antimikrobiellen Eigenschaften ganz oder teilweise verloren gehen und/oder die mechanischen und optischen Eigenschaften negativ beeinflusst werden.

Dabei war es überraschend, dass durch den Einsatz von Polyhexamethylenguanidin (PHMG) die oben aufgeführten, aus dem Stand der Technik bekannten Probleme in Kombination mit der Verwendung von nichtionischen anstatt ionischen Netz- und Trennmitteln weitestgehend vermieden oder reduziert werden können.

Die Anwendung von Polyhexamethylenguanidin (PHMG) im Bereich von gattungsgemäßen Imprägnierharz-Zusammensetzungen mit den oben beschrieben hohen mechanischen und optischen Anforderungen ist bisher nicht bekannt Lediglich im Bereich der zu Imprägnierharzen gänzlich unterschiedlichen Melamin-Hartplastik Anwendungen sowie den zu Melamin-Formaldehyd-Harzen entfernt verwandten Phenolharzen wurde vereinzelt die Beimischung, jedoch nicht die Einpolymerisation von festen, polymere Guanidin-Verbindung enthaltenden Pulvern vorgeschlagen.

So beschreibt die WO 2010/106002 A1 ein mikrobiozid wirkendes pulverförmiges Polymergemisch, welches ein erstes Polymer als Matrix aufweist, in welche ein zweites Polymer eingebracht ist, wobei das zweite Polymer ein polymeres Guanidin- oder Biguanidinderivat ist. Die WO 2010/106002 A1 schlägt als erstes Polymer eine Vielzahl von Polymeren vor, v.a. Thermoplaste, die in den Beispielen als fertige Kunststoffe aufgeschmolzen und mit der polymeren Guanidin-Verbindung in Extrudern vermengt werden. Lediglich in dem die Seiten 3 und 4 überbrückenden Absatz werden Phenoplaste und Aminoplaste, wie Melamin-Harze und Harnstoff-Harze, als mögliche Matrixpolymere genannt. Konkret wird jedoch nur die Einarbeitung des polymeren Guanidins in ein Phenolharz-Vorkondensat ("Novolak") beschrieben. Dem Fachmann ist klar, dass es hierbei nicht zu einem Einpolymerisieren der polymeren Guanidin-Verbindung in die Phenolharz-Matrix kommt.

Dem Fachmann ist beispielsweise von Mischungen aus Phenoplasten und Melamin bekannt, dass es bei Phenoplasten nicht zu einer Einpolymerisation von Aminogruppenhaltigen Komponenten, wie sie im Melamin oder auch in den polymeren Guanidin-Verbindungen enthalten sind, kommt. Es ist daher davon auszugehen, dass bei der in WO 2010/106002 A1 beschriebenen Ausführungsform Phenoplast und polymeres Guanidin nebeneinander in einfacher Mischung, nicht jedoch als Co-Kondensat, vorliegen. Als Anwendung schlägt die WO 2010/106002 A1 vor, dieses Pulver beispielsweise Dispersionsfarben zuzumischen oder als Füllstoff (sogenannter Zuschlagstoff) in der Papierindustrie einzusetzen. Eine Anwendung als Imprägnierharz oder in der Holzwerkstoff-, Laminat- oder Imprägnat-Herstellung wird nicht vorgeschlagen.

Die WO 2010/106002 A1 verweist explizit darauf, dass Bestandteile, die in Beschichtungsmaterialen, Farben und Lacken vorhanden sind zu einer Abschwächung bis Inaktivierung der antimikrobiellen Wirkung der polymeren Guanidine führen können, weshalb die Mischung des polymeren Guanidins mit dem Matrixpolymer, wie beispielsweise einem Thermoplast oder Phenoplast, und dessen Einsatz als Pulver eine wichtige Voraussetzung für die Weiterverarbeitung, das Einsatzgebiet und den Erhalt der antimikrobiellen Eigenschaften seien. Die Schrift zeigt so zwar eine Möglichkeit auf, die Inkompatibilität der polymeren Guanidin-Verbindungen mit Beschichtungsmaterialen, Farben und Lacken zu reduzieren, dennoch sind derartige Polymerpulver zur Einarbeitung in ein gattungsgemäßes Imprägnierharz, welches den oben dargelegten strengen Anforderungen genügen soll, völlig ungeeignet.

Bei Eintrag eines solchen Polymerpulvers sind Beeinträchtigungen der mechanischen Eigenschaften und vor allem eine inakzeptable Trübung des Imprägnierharzes zu erwarten. Daneben führt die Beimischung eines derartigen Polymerpulvers auch zu einer Störung der Kondensation bzw. Aushärtung des Imprägnierharzes, so dass eine deutlich "weichere" und damit eine nicht ausreichend widerstandsfähige Beschichtung erhalten werden würde.

Vor dem Hintergrund der WO 2010/106002 A1 und dem allgemeinen Fachwissen zu polymeren Guanidin-Verbindungen war es überraschend, dass in der erfindungsgemäßen Imprägnierharz-Zusammensetzung Polyhexamethylenguanidin (PHMG) auch ohne das gemäß WO 2010/106002 A1 erforderliche Matrixpolymer zu hervorragenden Ergebnissen führt, wenn es mit nichtionischen Netz- und Trennmitteln kombiniert wird.

Polymere Guanidin-Verbindungen, insbesondere Polyhexamethylenguanidin (PHMG), sind bislang hauptsächlich als desinfizierend wirkende Zusatzkomponenten zur Desinfektion der Haut- oder Schleimhaut-, in der Wundantiseptik, in Händedesinfektionsmitteln, zur reinen Oberflächendesinfektion, beispielsweise durch Auftragen und Abwischen einer Guanidin-haltigen Lösung, im medizinischem Bereich zur Bekämpfung von Bakterien oder zur Wasserdesinfektion, beispielsweise in Schwimmbädern, in Erscheinung getreten.

In der Desinfektionsmittel-Liste des VAH (mhp Verlag 2015), welche alle von der Desinfektionsmittel-Kommission zertifizierten Präparate enthält, ist zu Guanidinderivaten folgendes ausgeführt *"Guanidine werden aufgrund ihres schmalen Wirkungsspektrums [*...*] bei günstigen humantoxikologischen Eigenschaften bevorzugt für die Schleimhaut- und Wundantiseptik eingesetzt Aufgrund ihrer Remanenzwirkung sind sie als Zusatzkomponenten in Hautantiseptika und Händedesinfektionsmitteln anzutreffen, oder sie werden in Kombination mit anderen Wirkstoffen eingesetzt."*

Vor diesem Hintergrund sowie den oben beschriebenen Problematiken war es für den Fachmann nicht naheliegend, dass Polyhexamethylenguanidin (PHMG) problemlos in eine Imprägnierharz-Zusammensetzung eingearbeitet werden kann ohne deren mechanische Eigenschaften und Vernetzungsfähigkeit zu stören und gleichzeitig eine ausreichende antimikrobielle Wirkung gegenüber Mikroorganismen entfaltet. Insbesondere gilt dies für Mikroorganismen, die typischerweise cellulose- oder holzenthaltende Produkte (Laminate oder Imprägnate in Fußbodenbelägen, Oberflächen oder Möbeln) befallen. Die zu bekämpfenden Mikroorganismen in der Haut- oder Wasserdesinfektion unterscheiden sich grundlegend in ihrem Spektrum von denen, die typischerweise cellulose- oder holzenthaltende Produkte befallen. Bei der Humananwendung und der medizinischen Oberflächendesinfektion stehen vor allem Bakterien im Vordergrund. Bei den Mikroorganismen, die Holz bzw. cellulose- oder holzenthaltende Produkte (Laminate oder Imprägnate in Fußbodenbelägen, Oberflächen oder Möbeln) typischerweise befallen, handelt es sich vor allem um Pilze.

Überdies war es für den Fachmann nicht absehbar, dass Polyhexamethylenguanidin (PHMG) mit den in der Herstellung und bei der Verwendung von Imprägnierharz-Zusammensetzungen, bei der Laminat- und/oder Imprägnatherstellung herrschenden Prozessbedingungen sowie den darin eingesetzten Chemikalien kompatibel sein würden. Letztere Problematik wurde oben bereits diskutiert. In praktischen Versuchen zeigtedas erfindungsgemäß eingesetzte Polyhexamethylenguanidin (PHMG) überraschenderweise eine ausreichende Temperaturbeständig gegenüber den in der Herstellung und bei der Verwendung von Imprägnierharz-Zusammensetzungen, bei der Laminat- und/oder Imprägnatherstellung herrschenden Lagerbedingungen, Trocknungs- und/oder Presstemperaturen.

Der erfindungsgemäße Einsatz von Polyhexamethylenguanidin (PHMG) hat ferner auch den Vorteil, dass dieses eine sehr geringe Toxizität aufweist und sich in praktischen Versuchen auch keine Ausbildung von Resistenzen gegenüber den Mikroorganismen gezeigt hat. Weiterhin kann durch den Einsatz von Polyhexamethylenguanidin (PHMG) ein umweltfreundliches und/oder unbedenkliches Produkt erhalten werden, da dieses weder ein Schwermetall enthält, noch ein Biozid im Sinne der Biozidverordnung ist.

Überraschenderweise wurde zudem festgestellt, dass die antimikrobielle Wirkung von Polyhexamethylenguanidin (PHMG) wahrscheinlich auf einem rein physikalischen Wirkprinzip kationischer Oberflächen basiert. Solche physikalischen Wirkprinzipien fallen jedoch nicht unter die Biozid-Verordnung (EU) Nr. 528/2012. Diese definiert in Artikel 3 Absatz 1 a) Biozidprodukte als "jeglichen Stoff oder jegliches Gemisch in der Form, in der er/es zum Verwender gelangt, und der/das aus einem oder mehreren Wirkstoffen besteht, diese enthält oder erzeugt, der/das dazu bestimmt ist, auf andere Art als durch bloße physikalische oder mechanische Einwirkung Schadorganismen zu zerstören, abzuschrecken, unschädlich zu machen, ihre Wirkung zu verhindern oder sie in anderer Weise zu bekämpfen".

Ein weiterer Vorteil der erfindungsgemäßen Imprägnierharz-Zusammensetzung ist, dass sie auf einfache und kostengünstige Weise hergestellt werden kann. Ferner zeigt diese eine gute Lagerstabilität. Dies gilt auch für die aus der erfindungsgemäßen Imprägnierharz-Zusammensetzung erhältlichen Verarbeitungsprodukte.

Unter dem Begriff "Verarbeitungsprodukte", wie hier verwendet, werden insbesondere die weiter unten beschriebene erfindungsgemäße Melamin-Formaldehyd-Harzschicht sowie das erfindungsgemäße Laminat und/oder Imprägnat verstanden, welche die erfindungsgemäße Imprägnierharz-Zusammensetzung in teil- oder auskondensierter Form enthalten bzw. unter Einsatz dieser hergestellt wurden. Diese Verarbeitungsprodukte enthalten vorzugsweise die folgenden Komponenten:
g) ein Co-Kondensat aus Melamin-Formaldehyd-Harz und einer polymeren Guanidin-Verbindung,
b) ein nichtionisches Netzmittel,
c) ein nichtionisches Trennmittel, und
d) einen Härter.

Wenn hier oder an anderer Stelle von "Kondensation", "kondensiert" oder "Kondensat" die Rede ist, dann ist damit Kondensation, wie üblicherweise im Fachgebiet der Chemie verwendet, gemeint. Unter Kondensationsreaktion wird in der Chemie eine Reaktion verstanden, bei der sich mindestens zwei Moleküle unter Abspaltung von Wasser - alternativ auch Ammoniak, Kohlenstoffdioxid, Chlorwasserstoff, ein Alkanol oder ein anderer niedermolekularer Stoff - kovalent miteinander verbinden. Die "Kondensation" im Zusammenhang mit Harzen wird von dem in der holz- oder papierverarbeitenden Industrie tätigen Fachmann auch als sogenanntes "Aushärten" bezeichnet. Die Kondensation bzw. das Aushärten kann stufenweise bzw. teilweise erfolgen. Die Kondensation bzw. das Aushärten des Aminoplastharzes erfolgt typischerweise unter Einfluss eines Härters, erhöhter Temperatur und/oder Druck. Beispiele hierfür sind Trocknungsprozesse und/oder das Verpressen zu einem Laminat. Durch Anwesenheit und/oder Freisetzung eines Härters kann auch ein weiteres Kondensieren bzw. Aushärten des Harzes bei Lagerung oder bei der späteren Anwendung oder Fertigstellung des Endprodukts erfolgen.

Die Lagerstabilität ist vor allem bei der Imprägnatherstellung von entscheidender Bedeutung. Typischerweise werden Imprägnate separat hergestellt, aufgerollt und bis zu zwei Monate gelagert, bevor diese verarbeitet werden. Praktische Versuche haben ergeben, dass auch nach längerer Lagerzeit die anvisierten antimikrobiellen, mechanischen und optischen Eigenschaften der erfindungsgemäßen Imprägnierharz-Zusammensetzung erhalten bleiben und die aufgetragene Imprägnierharz-Zusammensetzung auch weiterhin gute Verklebungseigenschaften in der Weiterverarbeitung aufwies.

Die Imprägnierharz-Zusammensetzung ist üblicherweise flüssig, liegt also als Flüssigkeit vor. Diese kann feste Bestandteile in Form beispielsweise einer Suspension enthalten. Vorzugsweise ist die Imprägnierharz-Zusammensetzung auf wässriger Basis. Die Imprägnierharz-Zusammensetzung kann als Lösung oder Suspension eingesetzt werden. Bevorzugt wird diese als wässrige Lösung eingesetzt. In dieser Form lässt sich die Imprägnierharz-Zusammensetzung ohne große Anpassungen in die üblichen Prozessabläufe und Bedingungen bei der Imprägnat- und/oder Laminatherstellung einbinden und verarbeiten. Gemäß einer Ausführungsform liegen die Komponenten a) bis e) in der erfindungsgemäßen Imprägnierharz-Zusammensetzung in wässriger Lösung vor. Das heißt, die erfindungsgemäße Imprägnierharz-Zusammensetzung kann neben diesen Komponenten a) bis e) auch weitere nicht-lösliche Bestandteile enthalten.

In weiteren Versuchen zu der Imprägnierharz-Zusammensetzung sowie ihrer Verarbeitungsprodukte, zeichneten sich diese durch ihre gute UV-Beständigkeit aus.

Dies lässt auf eine gute Beständigkeit der Imprägnierharz-Zusammensetzung sowie ihrer Verarbeitungsprodukten schließen.

Weiterhin zeigen die erfindungsgemäße Imprägnierharz-Zusammensetzung sowie die daraus erhältlichen Verarbeitungsprodukte eine anhaltende antimikrobielle Wirkung.

"Antimikrobiell", wie hier verwendet, bedeutet, dass die Gesamtanzahl der Mikroorganismen auf der betreffenden Oberfläche über einen gewissen Zeitraum konstant oder abnehmend ist. Unter antimikrobiell wird insbesondere auch bakterizid, bakteriostatisch, fungizid und/oder fungistatisch verstanden. "Mikroorganismen" sind typischerweise mikroskopisch kleine Lebewesen (Organismen), die als Einzelwesen nicht mit bloßem Auge erkennbar sind. Sie bilden im System der Lebewesen keine einheitliche Gruppe. Zu den Mikroorganismen zählen Bakterien, Pilze, mikroskopische Algen sowie Protozoen (z. B. Pantoffeltierchen und der Malaria-Erreger Plasmodium) sowie Viren.

Wenn hier oder an anderer Stelle von "Bakterien" die Rede ist, dann ist damit das gesamte Reich der "Bacteria" gemeint Hierzu gehören beispielsweise Staphylokokken, Escherichia coli, Pseudomonas aeruginosa, Acinetobacter, Enterokokken, andere Erreger nosokomialer Infektionen und/oder holzzerstörende Bakterien.

Wenn hier oder an anderer Stelle von "Pilz" oder "Pilzbefall" die Rede ist, dann ist mit "Pilz" die breite Definition für das Reich der "Fungi" aus der biologischen Taxonomie gemeint. Dies schließt neben Einzellern wie Bäckerhefe auch Vielzeller wie Schimmelpilze oder Ständerpilze mit ein. Unter "Pilz" sind hier vor allem auch holzzerstörende und/oder holzverfärbende Pilze bzw. der Befall durch diese gemeint. Diese holzzerstörenden und/oder holzverfärbenden Pilze schädigen das Holz typischerweise durch beispielsweise Braunfäule, Weißfäule, Moderfäule, Schimmel, Bläue oder Rotstreifigkeit Gemäß einer Ausführungsform handelt es sich bei den Pilzen um Schimmelpilze und/oder Bläuepilze. Die Pilze können weiterhin ausgewählt sein aus den Basomyceten, Ascomyceten und Deutomyceten.

Unter "Erhöhung der Beständigkeit gegenüber Mikroorganismen" wie hier verwendet, ist eine Verringerung des Mikroorganismenbefalls im Vergleich zu einer nichtantimikrobiell wirkenden Referenz gemeint. Diese Beständigkeit von Oberflächen gegenüber mikrobiellem Befall kann beispielsweise in Anlehnung an die Norm EN ISO 846:1997 "Bestimmung der Einwirkung von Mikroorganismen auf Kunststoffe" ermittelt werden. Im Rahmen der Versuche wurde die antimikrobielle Wirksamkeit mittels der Testkeime *S. aureus* und *E. coli* überprüft und eine Keimreduktionen bis zu 5 log-Stufen innerhalb von 3 Stunden erreicht.

Überraschenderweise zeigen sich trotz der guten Wasserlöslichkeit des antimikrobiell wirkenden Polyhexamethylenguanidins keine Auswaschproblematik und damit einhergehende Wirkverluste. Das Polyhexamethylenguanidin (PHMG) scheint daher in der Imprägnierharz-Zusammensetzung bzw. in den späteren Verarbeitungsprodukten ausreichend fixiert zu sein. Ohne an eine bestimmte wissenschaftliche Theorie gebunden sein zu wollen, rührt diese Fixierung vermutlich daher, dass das Polyhexamethylenguanidin (PHMG) in das Melamin-Formaldehyd-Harz einkondensiert, wodurch ein Co-Kondensat aus Melamin-Formaldehyd-Harz und Polyhexamethylenguanidin (PHMG) erhalten wird.

Da die ganz oder teilweise ausgehärtete bzw. kondensierte Imprägnierharz-Zusammensetzung in den Verarbeitungsprodukten die gewünschten mechanischen und optischen Eigenschaften aufweist, ist davon auszugehen, dass sich dieses Co-Kondensat ohne Erzeugung von Störstellen problemlos weiter vernetzen kann. Es erfolgt somit eine kovalente Einbindung von Polyhexamethylenguanidin (PHMG) in das Melamin-Formaldehyd-Harz.

Ein derartiges Co-Kondensat von Melamin-Formaldehyd-Harz mit Polyhexamethylenhydrochlorid (PHMG^{∗}HCl) ist vereinfacht in Schema 3 dargestellt. Die gestrichelten Linien bzw. die mit dem Suffix "n" versehenen eckigen Klammern zeigen dabei die Fortsetzung des Makromoleküls an.

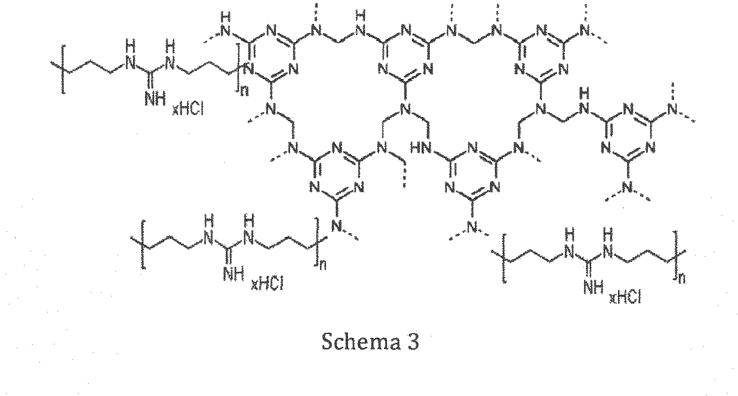

Die hervorragenden mechanischen und optischen Eigenschaften der erfindungsgemäßen Imprägnierharz-Zusammensetzung und den daraus erhältlichen Verarbeitungsprodukten waren überraschend, da - wie eingangs erläutert - eine Co-Polymerisation, beispielsweise selbst mit dem strukturverwandten Harnstoff, in der Vergangenheit zu inhomogenen Harzen führte, die den hohen Anforderungen an Imprägnierharze nicht genügten. Daher war es umso überraschender, dass Polyhexamethylenguanidin (PHMG), das auch eine Teil-Harnstoff-Struktur aufweist, keine "Störstellen" bildet, die einer homogenen Kondensation und damit Aushärtung bzw. Vernetzung des Harzes entgegenstehen. Der Fachmann hätte vielmehr mit einer Verschlechterung der Eigenschaften des Imprägnierharzes bzw. der Imprägnierharz-Zusammensetzung gerechnet. Vor dem Hintergrund der eingangs erläuterten schlechten Erfahrung selbst mit Melamin-Formaldehyd-Harnstoff Co-Kondensaten waren die guten mechanischen und optischen Eigenschaften der erfindungsgemäß erhältlichen Co-Kondensate aus Melamin-Formaldehyd-Harz und Polyhexamethylenguanidin (PHMG) überraschend.

Wenn hier oder an anderer Stelle von "Imprägnierharz-Zusammensetzung" die Rede ist, dann ist damit eine Mischung aus einem Imprägnierharz (Komponente a)) und mindestens den Komponenten b) bis e) gemeint. Damit ist die Imprägnierharz-Zusammensetzung von dem Imprägnierharz zu unterscheiden. Das in der erfindungsgemäßen Imprägnierharz-Zusammensetzung eingesetzte Imprägnierharz ist ein Melamin-Formaldehyd-Harz. Melamin-Formaldehyd-Harze sowie deren Herstellung bzw. Kondensation oder Aushärtung sowie Modifizierungen sind dem Fachmann allgemein bekannt und wurden eingangs bereits beschrieben.

"Imprägnierharz", wie hier verwendet, ist gleichbedeutend mit dem vom Fachmann ebenfalls verwendeten Begriff "Tränkharz". "Imprägnierharz-Zusammensetzung", wie hier verwendet, ist gleichbedeutend mit den vom Fachmann ebenfalls verwendeten Begriffen "Imprägnierharz-Flotte", "Tränkharz-Zusammensetzung" oder "Tränkharz - Flotte".

Als Komponente a) enthält die erfindungsgemäße Imprägnierharz-Zusammensetzung ein Melamin-Formaldehyd-Harz. Wenn hier oder an anderer Stelle von Imprägnierharz die Rede ist, dann ist damit das Melamin-Formaldehyd-Harz gemeint. Für das erfindungsgemäß einzusetzende Melamin-Formaldehyd-Harz gilt das bereits einleitend zu aus dem Stand der Technik bekannten Melamin-Formaldehyd-Harzen Gesagte.

Vorzugsweise ist das Melamin-Formaldehyd-Harz ein Kondensat mit einem Molverhältnis von Formaldehyd zu Melamin von 1:1,2 bis 1:1,7. Weiterhin weist das erfindungsgemäß einsetzbare Melamin-Formaldehyd-Harz bevorzugt einen pH-Wert im Bereich von 8 bis 11, bevorzugt von 9 bis 11 und besonders bevorzugt von 9,3 bis 10 auf. Vorteilhafter Weise weist das erfindungsgemäß einsetzbare Melamin-Formaldehyd-Harz eine Dichte bei 20 °C im Bereich von 1,1 bis 1,5 g/ml, bevorzugt von 1,15 bis 1,45 g/ml und besonders bevorzugt von 1,2 bis 1,4 g/ml, gemessen im Aräometerverfahren auf. Vorteilhaft ist ferner, wenn das erfindungsgemäß einsetzbare Melamin-Formaldehyd-Harz eine dynamische Viskosität bei 20°C von 50 bis 150 mPa·s, bevorzugt 70 bis 130 mPa·s, gemessen nach Rotationsviskosimetrie mit Kegel-Platte-Geometrie, aufweist.

Der Trübungspunkt des erfindungsgemäß einsetzbaren Melamin-Formaldehyd-Harzes liegt bevorzugt im Bereich von 35 bis 65 °C, bevorzugt bei 35 bis 50 °C, insbesondere bei 40 bis 45 °C. Zur Messung des Trübungspunktes wird eine Probe des Umsetzungsprozesses soweit mit Wasser verdünnt, dass der Gehalt an Melamin-Formaldehyd-Kondensat, das bei der Umsetzung entstanden ist und gegebenenfalls noch vorhandenes monomeres Melamin und Formaldehyd enthält, 6,75 Gew.-%, bezogen auf das Gesamtgewicht der Imprägnierharz-Zusammensetzung, beträgt. Die Menge an Melamin-Formaldehyd-Kondensat, Melamin und Formaldehyd lässt sich aus der Menge der Einsatzstoffe errechnen, wobei das in dem Melamin-Formaldehyd-Kondensat gebundene Melamin und Formaldehyd auch als monomeres Melamin und Formaldehyd gerechnet wird. Dieser errechnete Gehalt stimmt mit dem nach der in der DIN 12 605 beschriebenen Methode ermittelten Wert des Feststoffgehalts dann überein, wenn man diesem noch ca. 2 % hinzurechnet. Die so vorbereitete Probenlösung wird bis zur Bildung einer klaren Lösung erwärmt und anschließend mit einer Geschwindigkeit von ca. 10°C pro Minute abgekühlt. Der Trübungspunkt ist die Temperatur bei der eine Trübung entsteht, die mit bloßem Auge bei Durchsicht durch ein Probegefäß mit einer Schichtdicke von 1 cm sichtbar ist.

Der Feststoffgehalt des Melamin-Formaldehyd-Harzes liegt vorzugsweise von 50 bis 70 Gew.-%, bevorzugter 58 bis 65 Gew.-% und insbesondere bevorzugt 60 bis 63 Gew.-%, bezogen auf das Gesamtgewicht des Melamin-Formaldehyd-Harzes.

Gemäß einer Ausführungsform ist das Melamin-Formaldehyd-Harz das einzige Imprägnierharz, welches in der erfindungsgemäßen Imprägnierharz-Zusammensetzung enthalten ist

Gemäß einer bevorzugten Ausführungsform enthält die Imprägnierharz-Zusammensetzung das Melamin-Formaldehyd-Harz in einer Menge von 25 bis 60 Gew.-%, bezogen auf das Gesamtgewicht der Imprägnierharz-Zusammensetzung.

Als Komponente b) enthält die erfindungsgemäße Imprägnierharz-Zusammensetzung ein nichtionisches Netzmittel. Überraschenderweise wurde festgestellt, dass durch den Einsatz eines nichtionischen Netzmittels die oben aufgeführten, aus dem Stand der Technik bekannten Probleme weitestgehend vermieden oder reduziert werden können, aber dennoch die hohen, an Imprägnierharze gestellten Anforderungen erfüllt werden können. Die erfindungsgemäß eingesetzten nichtionischen Netzmittel weisen eine gute Kompatibilität mit der Imprägnierharz-Zusammensetzung und dem darin enthaltenen Polyhexamethylenguanidin (PHMG) auf.

Praktische Versuche haben gezeigt, dass durch Verwendung der üblicherweise in Imprägnierharz-Zusammensetzungen eingesetzten ionischen Netzmittel, sich der erfindungsgemäße Erfolg nicht einstellt. Verarbeitungsprodukte, die aus Imprägnierharz-Zusammensetzungen hergestellt wurden, die polymere Guanidin-Verbindungen, wie z.B. Polyhexamethylenguanidin (PHMG), und ionische Netzmittel enthielten, wiesen zwar gute mechanische und optische Eigenschaften auf, jedoch war - trotz der Anwesenheit der polymeren Guanidin-Verbindung, wie z.B. Polyhexamethylenguanidin (PHMG) - entweder keine oder eine nur unzureichende antimikrobielle Wirkung zu beobachten.

Netzmittel sind dem Fachmann bekannt und - in ionischer Form - übliche Bestandteile gattungsgemäßer Imprägnierharz-Zusammensetzungen. Unter Netzmittel versteht der Fachmann grenzflächenaktive Substanzen, die die Benetzbarkeit von Feststoffen durch Flüssigkeiten verbessern. Netzmittel setzen die Oberflächenspannung von Flüssigkeiten und die Grenzflächenspannung zwischen Flüssigkeit und Feststoffen herab. Grundsätzlich bestehen Netzmittel aus einem unpolaren (hydrophoben) und einem polaren (hydrophilen) Teil. Als unpolarer Teil kann z.B. eine Alkylgruppe dienen. Der polare Teil kann verschieden aufgebaut sein und bestimmt die Klassifizierung des Netzmittels in nichtionische, anionische, kationische und amphotere Netzmittel. Nichtionische Netzmittel können als unpolare Gruppe einen Alkylrest (C₁₂-C₁₈) und als polare Gruppen eine Hydroxylgruppe und/oder eine Ethergruppe aufweisen. Anionische Netzmittel weisen mindestens eine negativ geladene funktionale Gruppe auf. Die polare Gruppe kann dabei eine negativ geladene funktionale Gruppe, insbesondere -COO-(Carboxylat), -SO₃⁻ (Sulfonat) oder -SO₄²⁻ (Sulfat) sein. Kationische Netzmittel können als polare Gruppe beispielsweise eine quartäre Ammonium-Gruppe (R₄N⁺) aufweisen.

Netzmittel weisen typischerweise einen HLB-Wert von ca. 6,5 bis ca. 9,5 auf. Hierbei steht HLB für "hydrophilic-lipophilic balance", ein für den Fachmann geläufiger Fachbegriff (s. z.B. "Pharmazeutische Technologie", Voigt, Deutscher Apotheker Verlag Stuttgart, 2000, S. 348 ff). Vorzugsweise weist das nichtionische Netzmittel einen HLB nach Griffin von 10 bis 18 auf.

Das erfindungsgemäß einsetzbare Netzmittel ist ein nichtionisches Netzmittel. Bevorzugte nichtionische Netzmittel sind ausgewählt aus der Gruppe, bestehend aus Polyalkylenglycolether, Alkylpolyglucosiden und Nonylphenolethoxylaten und Fettalkoholethoxylaten und deren Mischungen. Besonders bevorzugt sind Polyalkylenglycolether und insbesondere bevorzugt sind Fettalkoholethoxylate (FAEO).

In einer bevorzugten Ausführungsform weist die Imprägnierharz-Zusammensetzung das nichtionische Netzmittel in einer Menge von 0,1 bis 3 Gew.-%, bevorzugt von 0,2 bis 1,0 Gew.-% und insbesondere bevorzugt von 0,2 bis 0,4 Gew.-%, bezogen auf den Festharzanteil des Melamin-Formaldehyd-Harzes, auf.

Als Komponente c) enthält die erfindungsgemäße Imprägnierharz-Zusammensetzung ein nichtionisches Trennmittel. Überraschenderweise wurde festgestellt, dass durch den Einsatz eines nichtionischen Trennmittels die oben aufgeführten, aus dem Stand der Technik bekannten Probleme weitestgehend vermieden oder reduziert werden können, aber dennoch die hohen Anforderungen an Imprägnierharze erfüllt werden können. Die erfindungsgemäß eingesetzten nichtionischen Trennmittel weisen eine gute Kompatibilität mit der Imprägnierharz-Zusammensetzung und dem darin enthaltenen Polyhexamethylenguanidin (PHMG) auf.

Unter Trennmittel werden allgemein feste oder flüssige Stoffe verstanden, die die Adhäsionskräfte zwischen zwei aneinandergrenzenden Oberflächen (beispielsweise Formteil/Form) verringern, d. h. ihr Verkleben verhindern, indem sie zwischen beiden Oberflächen einen leicht trennbaren Film bilden (Adhäsivmittel). Die allgemeinen Eigenschaften von Trennmitteln sind chemische Indifferenz, gutes Spreitungs-Vermögen, ein dem Verarbeitungsprozess angepasster Schmelzpunkt, geringe Flüchtigkeit und bei Flüssigkeiten geringe Löslichkeit in der zu trennenden Substanz. Trennmittel werden beispielsweise in Form von Dispersionen (Emulsionen oder Suspensionen), Sprays, Pasten, Pulvern angewendet. Einen Sonderfall stellen die sogenannten internen Trennmittel dar, welche in das zu entformende Gut eingemischt werden und sich entweder an der Oberfläche des zu entformenden Guts anzureichern vermögen oder eine schnellere Aushärtung der Oberfläche des zu entformenden Guts bewirken. Typische Trennmittel sind Silicone (in Form von Ölen, Öl-Emulsionen in Wasser, Fetten u. Harzen), Wachse (im Wesentlichen natürliche u. synthetische Paraffine mit und ohne funktionelle Gruppen), Metallseifen (Metall-Salze von Fettsäuren, wie Calcium-, Blei-, Magnesium-, Aluminium-, Zinkstearat), Fette, Polymere (Polyvinylalkohol, Polyester u. Polyolefine), Fluorkohlenstoffe, anorganische Trennmittel in Form von Pudern (wie Graphit, Talk und Glimmer). Trennmittel können unterschiedliche Strukturen aufweisen und können daher in anionische, kationische und nichtionische Trennmittel unterteilt werden.

In gattungsgemäßen Imprägnierharz-Zusammensetzungen werden vom Fachmann üblicherweise vor allem ionische Trennmittel eingesetzt. Hierzu zählen Fettsäurealkylsulfonate, Fettsäurealkylphosphate. Diese ionischen Trennmittel haben den Vorteil, dass sie synthetisch gut zugänglich sind und damit wirtschaftlich günstig.

Praktische Versuche haben gezeigt, dass durch Verwendung der üblicherweise in Imprägnierharz-Zusammensetzungen eingesetzten ionischen Trennmittel sich der erfindungsgemäße Erfolg nicht einstellt. Verarbeitungsprodukte, die aus Imprägnierharz-Zusammensetzungen hergestellt wurden, die polymere Guanidin-Verbindungen, wie z.B. Polyhexamethylenguanidin (PHMG), und ionische Trennmittel enthielten, wiesen zwar gute mechanische und optische Eigenschaften auf, jedoch war - trotz der Anwesenheit der polymeren Guanidin-Verbindung, wie z.B. Polyhexamethylenguanidin (PHMG) - entweder keine oder eine nur unzureichende antimikrobielle Wirkung zu beobachten.

Bevorzugte nichtionische Trennmittel sind ausgewählt aus der Gruppe, bestehend aus Fettsäureglyceriden, ethoxylierten Fettalkoholen und höhere Fettsäurephosphatestern und deren Mischungen. Besonders bevorzugt sind Fettsäureglyceride und insbesondere bevorzugt sind ethoxylierte Fettalkohole.

In einer bevorzugten Ausführungsform weist die Imprägnierharz-Zusammensetzung das nichtionische Trennmittel in einer Menge von 0,1 bis 1,0 Gew.-%, bevorzugt von 0,2 bis 0,5 Gew.-% und insbesondere bevorzugt von 0,2 bis 0,4 Gew.-%, bezogen auf den Festharzanteil des Melamin-Formaldehyd-Harzes, auf.

Als Komponente d) enthält die erfindungsgemäße Imprägnierharz-Zusammensetzung einen Härter. Härter werden bei den Imprägnierharzen zur Förderung der Kondensation bzw. der Aushärtung eingesetzt. Härter, welche in gattungsgemäßen Imprägnierharz-Zusammensetzungen eingesetzt werden, setzen typischerweise in Gegenwart von Wasser und/oder bei Wärmeeinwirkung mindestens eine Säure frei. Besonders bevorzugt setzt der erfindungsgemäß einzusetzende Härter in Gegenwart von Wasser und/oder bei Wärmeeinwirkung eine Säure frei. Auf diese Weise kann gezielt gesteuert werden, unter welchen Bedingungen der Härter die Säure freisetzt. Dies erlaubt eine gute Kontrolle über das Verfahren. Typischerweise wird eine Brönsted-Säure freigesetzt. Brönsted-Säuren sind dem Fachmann allgemein bekannt. Beispiele und Eigenschaften von Brönsted-Säuren sind beispielsweise im "Basiswissen der Chemie", C. Mortimer, Thieme, 7. Auflage, 2001 auf den Seiten 281 bis 290 beschrieben. Ferner kann als Härter auch eine Brönsted-Säure eingesetzt werden.

Erfindungsgemäß einsetzbare Härter sind beispielsweise para-Toluolsulfonsäure, Morpholin, para-Toluolsulfonsäure-Morpholinsalze, Alkylaminsalze, Ammonium-Salze, Morpholin-p-Toluolsulfonat, Ethanolamin-Hydrochlorid und deren Mischungen.

In einer bevorzugten Ausführungsform weist die Imprägnierharz-Zusammensetzung den Härter in einer Menge von 0,1 bis 1,0 Gew.-%, bevorzugt von 0,3 bis 0,8 Gew.-% und insbesondere bevorzugt von 0,5 bis 0,6 Gew.-%, bezogen auf den Festharzanteil des Melamin-Formaldehyd-Harzes, auf.

Praktische Versuche haben gezeigt, dass obwohl es bei den Komponenten Netzmittel und Trennmittel in der erfindungsgemäßen Imprägnierharz-Zusammensetzung wichtig ist, nichtionische Vertreter einzusetzen, die üblichen Säure-freisetzenden Härter ohne Qualitätseinbußen verwendet werden können.

Als Komponente e) enthält die erfindungsgemäße Imprägnierharz-Zusammensetzung Polyhexamethylenguanidin (PHMG).

Polyhexamethylenguanidin (PHMG) ist eine polymere Guanidin-Verbindung, insbesondere eine polymere Mono-Guanidin-Verbindung, und weist als Strukturelement nur Mono-Guanidin-Gruppen auf, welche nachfolgend beispielhaft dargestellt ist.

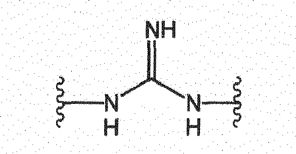

Guanidine sind Iminoharnstoffe bzw. Carbamidine. Sie besitzen eine Harnstoff-Teilstruktur. Guanidine bzw. polymere Guanidin-Verbindungen sind dem Fachmann allgemein bekannt. Die Eigenschaften und Darstellung von Guanidinen bzw. polymeren Guanidin-Verbindungen sind beispielsweis in "Ullmanns Enzyklopädie der technischen Chemie -Band 12", Verlag Chemie, GmbH, 1976, Seiten 411-419 beschrieben. Die Darstellung von Polyhexamethylenguanidin (PHMG) ist beispielsweise in der WO 1999/054291 A1 beschrieben.

Die in Polyhexamethylenguanidin (PHMG)enthaltenen Guanidingruppen können auch in geladener Form vorliegen, insbesondere als Kationen in einem Salz mit Gegenanion.

Polyhexamethylenguanidin (PHMG) weist die Strukturformel (I) auf.

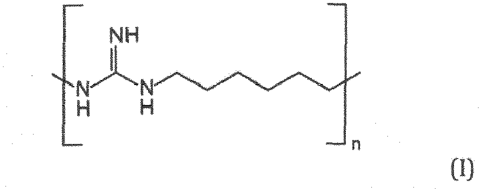

PHMG ist kommerziell erhältlich. PHMG ist beispielsweise unter der CAS-Nr. 57028-96-3 (PHMG-Hydrochlorid) erhältlich.

Wenn hier oder an anderer Stelle von Polyhexamethylenguanidin (PHMG) die Rede ist, dann sind damit auch jegliche Salze oder sonstigen Derivate davon gemeint. Besonders vorteilhaft ist, wenn Polyhexamethylenguanidin (PHMG) in einer wasserlöslichen Form vorliegt, z.B. als Salz. Praktische Versuche haben gezeigt, dass dies ein gutes Einarbeiten bzw. Einkondensieren des Polyhexamethylenguanidin (PHMG) in die Melamin-Formaldehyd-Struktur ermöglicht.

Die Salze von Polyhexamethylenguanidin (PHMG) zeigen ferner eine geringere korrosive Wirkung, sodass die bei der Herstellung der Imprägnierharz-Zusammensetzung und den daraus erhältlichen Harzbeschichtungen, Laminaten oder Imprägnaten eingesetzten metallischen Geräte geschont werden und sich auch das Anwendungsspektrum verbessert. Unabhängig von der geringeren Korrosivität erhöht sich durch die bevorzugten Ionen die Umwelt-verträglichkeit des Produktes bzw. seiner Abbauprodukte.

Vorzugsweise liegt das Polyhexamethylenguanidin (PHMG) als Salz, insbesondere als wasserlösliches Salz vor.

Das Salz von Polyhexamethylenguanidin (PHMG) kann ausgewählt sein aus der Gruppe, bestehend aus Hydrochlorid, Chlorid, Hydroxid, Phosphat, Fluorid, Bromid, Jodid, Formiat, Acetat, Diphosphat, Sulfat, Sulfid, Sulfit, Nitrat, Thiocyanat, Thiosulfat, Carbonat, Maleat, Fumarat, Tartrat, Mesylat, Glukonat und Toluolsulfonat, wobei Hydrochlorid, Chlorid, Hydroxid, Phosphat, Hydrogenphosphat, Formiat, Citrat, Diphosphat, Acetat und Carbonat bevorzugt sind. Besonders bevorzugt ist Formiat, Hydrochlorid und/oder Chlorid. Insbesondere bevorzugt ist, wenn als Polyhexamethylenguanidin (PHMG)PHMG-Hydrochlorid (PHMG^{∗}HCI) eingesetzt wird.

Ein weiterer Vorteil des erfindungsgemäß einsetzbaren Polyhexamethylenguanidin (PHMG)ist, dass sich sein Einsatz auf einfache Weise in übliche Verfahren der Imprägnat- und/oder Laminatherstellung integrieren lässt. Die Wasserlöslichkeit von Polyhexamethylenguanidin (PHMG) ist von besonderem Vorteil. Flüssigkeiten allgemein, insbesondere wässrige Lösungen oder Suspensionen lassen sich gut in die üblichen Verfahrensschritte und Anlagen, die bei der Imprägnat- und/oder Laminatherstellung Einsatz finden, integrieren. Es sind keine aufwändigen Zwischenschritte oder Verfahrensunterbrechungen erforderlich. Aufgrund der Wasserlöslichkeit von Polyhexamethylenguanidin (PHMG) bzw. seiner Salze müssen keine organischen Lösungsmittel in die erfindungsgemäße Imprägnierharz-Zusammensetzung eingebracht werden. Derartige Lösungsmittel stellen zum einen eine Brandgefahr und zum anderen eine zusätzliche, potentiell gesundheitsschädliche Emissionsquelle dar.

Weiterhin wurde gefunden, dass schon geringe Konzentrationen des erfindungsgemäß einzusetzenden Polyhexamethylenguanidin (PHMG)in der Imprägnierharz-Zusammensetzung ausreichen, um in den daraus erhältlichen Verarbeitungsprodukten, beispielsweise in einer Harzbeschichtung, einem Laminat oder Imprägnat, die gewünschte Beständigkeit gegenüber Mikroorganismen zu erreichen.

In einer bevorzugten Ausführungsform weist die Imprägnierharz-Zusammensetzung Polyhexamethylenguanidin (PHMG)in einer Menge von 0,01 bis 10 Gew.-%, bevorzugt von 1,0 bis 5,0 Gew.-% und insbesondere bevorzugt von 1,0 bis 3,0 Gew.-%, bezogen auf den Festharzanteil des Melamin-Formaldehyd-Harzes, auf.

Neben den oben beschriebenen Komponenten a) bis e) kann die erfindungsgemäße Imprägnierharz-Zusammensetzung weitere Zusatzstoffe enthalten.

So enthält die Imprägnierharz-Zusammensetzung gemäß einer bevorzugten Ausführungsform einen oder mehrere mehrwertige Alkohole. Besonders bevorzugt sind C2- bis C12-Diole wie beispielsweise Diethylenglykol, Propylenglykol, Butandiol-1,4, Butylenglykol, Pentandiol, Propantriol und/oder Hexandiol, insbesondere Diethylenglykol. Die mehrwertigen Alkohole werden bevorzugt in einer Menge von 0,5 bis 10 Gew.-%, bevorzugt 1 bis 5 Gew.-% und insbesondere bevorzugt 3,5 bis 5 Gew.-%, bezogen auf den Festharzanteil des Melamin-Formaldehyd-Harzes, eingesetzt. Die vorgenannten Alkohole erfüllen insbesondere die Funktion eines Weichmachers.

Ferner kann die Imprägnierharz-Zusammensetzung Weichmacher enthalten. Bevorzugte Weichmacher sind ausgewählt aus der Gruppe bestehend aus ε-Caprolactam, Paratoluolsulfonamid und deren Mischungen. Bevorzugt wird der Weichmacher in einer Menge von 0,1 bis 10 Gew.-%, bevorzugt 0,5 bis 3 Gew.-% und insbesondere bevorzugt 0,5 bis 2,5 Gew.-%, bezogen auf den Festharzanteil des Melamin-Formaldehyd-Harzes, eingesetzt.

Es wurde auch gefunden, dass sich vorteilhafte Ergebnisse einstellen, je geringer der Anteil von anionischen Netzmitteln und/oder anionischen Trennmitteln in der Imprägnierharz-Zusammensetzung ist. Praktische Versuche haben ergeben, dass die üblicherweise in Imprägnierharz-Zusammensetzungen eingesetzten anionischen Netzmittel und/oder anionischen Trennmittel in Verbindung mit den übrigen Komponenten a), d) und e), insbesondere der polymeren Guanidin-Verbindung e), zu schlechteren Ergebnissen hinsichtlich antimikrobieller Aktivität, mechanischen und/oder optischen Eigenschaften führen. Daher ist es gemäß einer Ausführungsform der Erfindung vorgesehen, deren Einsatz zu minimieren oder diese gar nicht erst einzusetzen.

In einer bevorzugten Ausführungsform weist die Imprägnierharz-Zusammensetzung höchstens 0,05 Gew.-% anionische Netzmittel, insbesondere höchstens 0,01 Gew.-% anionische Netzmittel, bezogen auf den Festharzanteil des Melamin-Formaldehyd-Harzes, und/oder höchstens 0,05 Gew.-% anionische Trennmittel, insbesondere höchstens 0,01 Gew.-% anionische Trennmittel, bezogen auf den Festharzanteil des Melamin-Formaldehyd-Harzes, auf. Vorzugsweise weist die Imprägnierharz-Zusammensetzung kein anionisches Netzmittel und/oder anionisches Trennmittel auf. Anders ausgedrückt enthält die erfindungsgemäße Imprägnierharz-Zusammensetzung vorzugsweise als Netzmittel ausschließlich nichtionische Netzmittel und/oder als Trennmittel ausschließlich nichtionische Trennmittel.

In einer weiteren Ausführungsform kann die Imprägnierharz-Zusammensetzung ferner als weitere Komponente f) eine quaternäre Ammonium-Verbindung enthalten. Vorzugsweise ist die quaternäre Ammonium-Verbindung ausgewählt aus der Gruppe, bestehend aus Didecyldimethylammoniumchlorid (DDAC), Dimethyloctadecyl[3-(trimethoxysilyl)propyl]ammonium, Dimethyltetradecyl[3-(trimethoxysilyl)propyl]ammoniumchlorid, Alkyl (C₁₂₋₁₈)dimethylbenzylammoniumchlorid (ADBAC(C₁₂₋₁₈)), Alkyl(C₁₂₋₁₆)dimethylbenzylammoniumchlorid (ADBAC/BKC(C₁₂₋₁₆)), Didecyldimethylammoniumchlorid (DDAC(C₈₋₁₀)), Alkyl(C₁₂₋₁₄)dimethylbenzylammoniumchlorid (ADBAC(C₁₂₋₁₄)) und Alkyl(C₁₂₋₁₄)ethylbenzylammonium chlorid (ADEBAC(C₁₂₋₁₄)), Dialkyl(C₈₋₁₀)dimethylammoniumchlorid, Alkyl(C₁₂₋₁₄)dimethyl(ethylbenzyl)ammoniumchlorid.

Die quaternäre Ammonium-Verbindung kann dabei in einer Menge von 0,01 bis 3 Gew.-%, bevorzugt 0,1 bis 2 Gew.-%und insbesondere bevorzugt 0,5 bis 1 Gew.-%, bezogen auf den Festharzanteil des Melamin-Formaldehyd-Harzes, in der Imprägnierharz-Zusammensetzung enthalten sein.

Ferner betrifft die Erfindung ein Verfahren zur Herstellung der erfindungsgemäßen Imprägnierharz-Zusammensetzung. Die Imprägnierharz-Zusammensetzung wird durch Mischen der Komponenten a) bis e) erhalten. Die Imprägnierharz-Zusammensetzung kann durch gängige Verfahren hergestellt werden.

In einer Ausführungsform des Verfahrens wird das Melamin-Formaldehyd-Harz als Vorkondensat in einem wässrigen Medium mit Melamin und Formaldehydlösung umgesetzt Das Polyhexamethylenguanidin (PHMG) kann vor, während oder nach der Umsetzung des Melamins mit dem Formaldehyd hinzugefügt werden. Vorzugsweise wird das Polyhexamethylenguanidin (PHMG) gemeinsam mit dem Weichmacher hinzugefügt. Vorteilhafterweise liegt der pH-Wert der wässrigen Kondensationsphase im Bereich von 8,2 bis 9,7, bevorzugt 8,4 bis 9,4, insbesondere 8,8 bis 9,3. Der Temperaturbereich liegt bevorzugt bei 80 bis 120°C und besonders bevorzugt bei 95 bis 103 °C. Das Molverhältnis von Melamin zu Wasser beträgt bevorzugt 0,1 bis 3,0, bevorzugter 0,1 bis 2,8 und besonders bevorzugt 0,1 bis 2,5. Zur Einstellung dieser Bereiche kann gegebenenfalls Wasser durch Destillation bei Normaldruck entfernt werden. Melamin wird üblicherweise in fester Form eingesetzt. Formaldehyd kommt üblicherweise in Form konzentrierter wässriger Lösungen, beispielsweise als 30 bis 60 Gew.-%-ige wässrige Lösung, bevorzugt als 40 bis 45 Gew.-%-ige Lösung, zum Einsatz. Vorteilhafterweise wird die Kondensationsreaktion so lange durchgeführt, bis die Imprägnierharz-Zusammensetzung einen Trübungspunkt von 40 bis 45 °C aufweist.

Es können auch die oben genannten Stoffe zugefügt werden. Im Übrigen gilt das oben zu den Komponenten a) bis e) bzw. für die oben genannten Stoffe das jeweils dazu bereits Gesagte.

Ein weiterer Gegenstand der Erfindung ist eine Harzbeschichtung erhältlich durch Kondensation der erfindungsgemäßen Imprägnierharz-Zusammensetzung.

Wenn hier von "Harzbeschichtung" die Rede ist, so ist damit die ganz oder teilweise ausgehärtete, d.h. kondensierte, erfindungsgemäße Imprägnierharz-Zusammensetzung gemeint. Bezüglich der Bestandteile und Eigenschaften der Harzbeschichtung gilt daher das bereits zur erfindungsgemäßen Imprägnierharz-Zusammensetzung Gesagte.

Es wurde gefunden, dass die erfindungsgemäße Harzbeschichtung den hohen Qualitätsanforderungen an Oberflächen in der Laminatherstellung genügt. Insbesondere zeigen die erfindungsgemäßen Harzbeschichtungen eine fast vollständige Transparenz und/oder die Erhaltung des hohen Glanzes des Laminats nach Aufbringung und Aushärtung der erfindungsgemäßen Imprägnierharz-Zusammensetzung. Ferner haben praktische Versuche gezeigt, dass die erfindungsgemäße Harzbeschichtung eine normkonforme Mikrokratzbeständigkeit aufweist. Diese wurde mittels eines modifizierten Martindale Tests, einem genormtem Prüfverfahren zur Bestimmung der Mikrokratzbeständigkeit bei Laminatböden (DIN EN ISO 12947:04/1999 bzw. IHD W-445, Version Mai 2007), bestimmt.

Die erfindungsgemäße Harzbeschichtung enthält bevorzugt das Melamin-Formaldehyd-Harz und Polyhexamethylenguanidin (PHMG), deren Co-Kondensat und/oder oben beschriebene Imprägnierharz-Zusammensetzung. Zu diesen Komponenten gilt das oben bereits Gesagte.

Die Kondensation bzw. das Aushärten der erfindungsgemäßen Imprägnierharz-Zusammensetzung zu der Harzbeschichtung kann unter Einwirkung des in der Imprägnierharz-Zusammensetzung enthaltenen Härters, erhöhter Temperatur und/oder Druck stattfinden. Dies kann beispielsweise bei der Vortrocknung eines Imprägnats, Overlays und/oder bei dem Verpressen zu einem Laminat der Fall sein. Es ist auch denkbar, dass ein weiterer Kondensationsprozess während der Lagerung des Imprägnats, Overlays und/oder eines Laminats erfolgt. Dies kann beispielsweise durch weitere Anwesenheit oder nachträgliche Freisetzung eines Härters bei dem gelagerten oder bereits verbauten Imprägnat, Overlay und/oder Laminat geschehen. Im Übrigen gilt das zur Kondensation bzw. Aushärten bereits weiter oben Gesagte.

Da das Polyhexamethylenguanidin (PHMG) während des Aushärtens in die Melamin-Formaldehyd Matrix einpolymerisiert, ist die Harzbeschichtung gemäß einer Ausführungsform dadurch gekennzeichnet, dass sie ein Co-Kondensat aus dem Melamin-Formaldehyd-Harz (Komponente a)) und Polyhexamethylenguanidin (PHMG) (Komponente e)) enthält. Für die Harzbeschichtung sowie für die Komponenten a) bis e) gilt jeweils das bereits Gesagte. Die Harzbeschichtung kann die oben beschrieben zusätzlichen Substanzen bzw. Additive enthalten.

Die Harzbeschichtung kann im Wesentlichen ganz oder teilweise aus dem Co-Kondensat bestehen. Die Harzbeschichtung wird vorzugsweise durch Kondensation bzw. Aushärten erhalten. Insbesondere wird die Harzbeschichtung durch ganze oder teilweise Kondensation bzw. Aushärten der erfindungsgemäßen Imprägnierharz-Zusammensetzung erhalten.

Die Harzbeschichtung kann beispielsweise als Beschichtung, insbesondere als Melamin-Formaldehyd-Lack oder als sogenanntes Flüssig-Overlay vorliegen. Die Harzbeschichtung kann als Teil eines Laminats vorliegen. Die Harzbeschichtung kann aber auch selbst ein Trägermaterial enthalten. In dieser Ausführungsform kann die Harzbeschichtung beispielsweise als Teil eines Laminats vorliegen.

In einer bevorzugten Ausführungsform enthält die Harzbeschichtung die folgenden Komponenten:
g) ein Co-Kondensat aus Melamin-Formaldehyd-Harz und Polyhexamethylenguanidin (PHMG),
b) ein nichtionisches Netzmittel,
c) ein nichtionisches Trennmittel, und
d) einen Härter.

In einer besonders bevorzugten Ausführungsform ist die Komponente g) ein Co-Kondensat aus dem Melamin-Formaldehyd-Harz und PHMG-HCl.

In einer weiteren bevorzugten Ausführungsform weist die Harzbeschichtung eine Dicke von 0,01 bis 2 mm, bevorzugt von 0,05 bis 1 mm und insbesondere bevorzugt von 0,1 bis 0,3 mm auf.

Die erfindungsgemäße Imprägnierharz-Zusammensetzung und Harzbeschichtung lassen sich in der Holzwerkstoff-, Imprägnat- und/oder Laminatherstellung verwenden.

Ein weiterer Gegenstand der Erfindung ist ein Imprägnat, enthaltend
i) die erfindungsgemäße Imprägnierharz-Zusammensetzung
ii) ein Imprägnatträgermaterial.

Unter "Imprägnat", wie hier verwendet, wird ein lagerfähiges Erzeugnis verstanden, welches insbesondere ein saugfähiges Imprägnatträgermaterial, das mit der erfindungsgemäßen Imprägnierharz-Zusammensetzung beschichtet, imprägniert oder getränkt wurde, enthält. Hierbei befindet sich typischerweise auf der äußersten Schicht bzw. der Oberfläche des Imprägnats eine mindestens teilweise molekulare Schicht der (teil-)ausgehärteten Imprägnierharz-Zusammensetzung. Das Imprägnat kann aber auch bewusst ganz oder teilweise mit dem Imprägnierharz getränkt, beschichtet oder imprägniert sein.

Überraschenderweise wurde gefunden, dass das erfindungsgemäße Imprägnat eine hervorragende Stabilität gegenüber äußeren Einflüssen aufweist, und gleichzeitig die geforderten Qualitätsmerkmale sowie die antimikrobielle Wirksamkeit beibehält.

Vorteilhaft ist auch die hervorragende Lagestabilität des Imprägnats. Das Imprägnat zeigte während und nach der Lagerung keine Qualitätseinbußen. Dies ist ein wichtiger Aspekt u.a. bei der Laminatherstellung, da Imprägnate typischerweise vor der Weiterverarbeitung zu z.B. Laminaten separat hergestellt und über Wochen zwischengelagert werden. Daher müssen solche Imprägnate nicht nur auch nach Wochen weiter verarbeitbar sein, sondern im vorliegenden Fall auch ihre antimikrobiellen Eigenschaften beibehalten. Da in vorherigen Versuchen mit anderen antimikrobiellen Substanzen mehrfach gefunden wurde, dass diese teilweise schon bei der Herstellung und auch bei der Weiterverabeitung ihre antimikrobielle Wirkung verloren, war es überraschend, dass das erfindungsgemäße Imprägnat zum einen nach Lagerung problemlos weiterverarbeitet werden und zum anderen auch nach der Lagerung und/oder Weiterverarbeitung zufriedenstellende antimikrobielle Eigenschaften aufwies.

Das erfindungsgemäße Imprägnat weist mindestens eine Schicht i) auf mindestens einer seiner Hauptseiten auf, die ganz oder teilweise aus der Imprägnierharz-Zusammensetzung besteht oder diese enthält. Wenn hier oder anderer Stelle von "Hauptseiten" oder "beiden Hauptseiten" bzw. "einer der Hauptseiten" die Rede ist, dann sind damit die Ober- und Unterseite bzw. mindestens die Ober- und/oder die Unterseite des Imprägnatträgermaterials, des Imprägnats oder des Laminats gemeint. Wenn hier oder anderer Stelle von "Oberseite" die Rede ist, dann ist damit die im späteren Produkt nach Außen liegende Seite gemeint. Entsprechend ist die "Unterseite" die der Oberseite gegenüberliegende Seite. Beispielsweise bedeutet dies für die Verarbeitung eines fertigen Imprägnats in der Laminatherstellung, dass die Oberseite die, bezogen auf den Innenausbau, nach Innen gerichtete Seite ist, wohingegen die Unterseite zu dem Laminatträgermaterial zeigt.

Typischerweise wird das Imprägnat dadurch erhalten, dass ein Imprägnatträgermaterial mit der erfindungsgemäßen Imprägnierharz-Zusammensetzung getränkt, beschichtet und/oder imprägniert wurde bevor sie unter Druck und/oder Temperatur zum Imprägnat getrocknet oder vorgetrocknet wurde. Die Imprägnierharz-Zusammensetzung kann durch Sprühen, Tauchen oder Walzen auf das Imprägnatträgermaterial auf mindestens eine der Hauptseiten des Imprägnatträgermaterials aufgetragen werden. Es ist bei dem erfindungsgemäßen Imprägnat vorgesehen, dass das Aufbringen der Imprägnierharz-Zusammensetzung direkt auf das Imprägnatträgermaterial erfolgt. Es erfolgt keine vorherige Beschichtung mit einem Imprägnier- oder Tränkharz. Das Imprägnieren bzw. Tränken oder Beschichten kann auch mehrfach vorgenommen werden, wobei optional nach jedem Beschichtungs-, Imprägnierungs- und/oder Tränkungsschritt die Schicht i) ganz oder teilweise getrocknet werden kann. Bei der sich an die Imprägnierung, Tränkung und/oder Beschichtung anschließende Druck- und/oder Temperatureinwirkung kann ein ganz oder teilweises Aushärten bzw. Kondensieren der Imprägnierharz-Zusammensetzung stattfinden, wodurch sich die erfindungsgemäße Harzbeschichtung ganz oder teilweise ausbilden kann. Typischerweise werden die erfindungsgemäßen Imprägnate mit der Imprägnierharz-Zubereitung imprägniert und/oder getränkt, sodass mindestens eine der Hauptseiten des Imprägnatträgermaterials oder beide Hauptseiten des Imprägnatträgermaterials zumindest eine molekulare Schicht der Imprägnierharz-Zusammensetzung bzw., wenn diese aushärtet, die Harzbeschichtung aufweisen. Ferner weist das Imprägnat mindestens nach der Beschichtung, Tränkung und/oder Imprägnierung eine molekulare Schicht der Imprägnierharz-Zusammensetzung bzw., wenn diese aushärtet, der Harzbeschichtung auf seiner Oberseite auf. Auch bei einem Imprägnat, welches mit der Imprägnierharz-Zusammensetzung durchtränkt wurde, liegt trotz Durchtränkung des Imprägnatträgermaterials mit der erfindungsgemäßen Imprägnierharz-Zusammensetzung bzw. der daraus erhältlichen Harzbeschichtung eine zumindest molekulare Schicht Imprägnierharz-Zusammensetzung bzw. der daraus erhältlichen Harzbeschichtung auf einer der Hauptseiten des Imprägnatträgermaterials vor. Gemäß einer Ausführungsform des erfindungsgemäßen Imprägnats weist das Imprägnat mindestens auf einer seiner Hauptseiten eine Schicht der erfindungsgemäßen Imprägnierharz-Zusammensetzung oder die erfindungsgemäßen Harzbeschichtung auf. Insbesondere befindet sich diese Schicht i) mindestens auf der Oberseite des Imprägnatträgermaterials bzw. des Imprägnats. In einer ganz bevorzugten Ausführungsform ist die Schicht i) des erfindungsgemäßen Imprägnats ein Flüssig-Overlay, das ganz oder teilweise aus der Imprägnierharz-Zusammensetzung besteht oder diese enthält.

In einer weiteren Ausführungsform weist das Imprägnat die Imprägnierharz-Zusammensetzung in einer Menge von 30 bis 600 Gew.-%, 350 bis 550 Gew.-% oder 100 bis 180 Gew.-%, jeweils bezogen auf das Trockengewicht des Imprägnats, auf.

In einer anderen Ausführungsform weist das Imprägnat die Imprägnierharz-Zusammensetzung in einer Menge von 10 g/m² bis 250 g/m², bevorzugt 50 g/m² bis 150 g/m² und insbesondere bevorzugt 80 g/m² bis 120 g/m², bezogen auf eine der beiden Oberflächen des Imprägnats, auf.

Nach den Imprägnierungs-, Beschichtungs- und/oder Trocknungsschritten und bevor dieses gelagert oder weiterverarbeitet wird, wird das Imprägnat auf eine definierte Restfeuchte eingestellt. Gemäß einer Ausführungsform der Erfindung weist das Imprägnat eine Restfeuchte von bevorzugt 2 bis 8 Gew.-%, besonders bevorzugt 4 bis 6 Gew.-% auf.

Das erfindungsgemäße Imprägnat umfasst ein Imprägnatträgermaterial. Das Imprägnatträgermaterial enthält vorzugsweise cellulosehaltiges und/oder lignocellulosehaltiges Material.

Wenn hier oder anderer Stelle von "cellulosehaltigen Material" und/oder "lignocellulosehaltigen Material" die Rede ist, dann wird darunter jede Art von Material verstanden, das Cellulose und/oder Lignocellulose enthält. Lignocellulose im Sinne der Erfindung enthält Lignin sowie Cellulose und/oder Hemicellulose. "Cellulose" ist ein unverzweigtes Polysaccharid, das aus mehreren hundert bis zehntausend Cellobiose-Einheiten besteht. Diese Cellobiose-Einheiten bestehen wiederum aus zwei Molekülen Glucose, die über eine β-1,4-glykosidische Bindung verknüpft sind. "Hemicellulose" ist eine Sammelbezeichnung für verschiedene Bestandteile pflanzlicher Zellwände. Bei den Hemicellulosen handelt sich um verzweigte Polysaccharide mit einer geringeren Kettenlänge - üblicherweise weniger als 500 Zuckereinheiten - welche aus verschiedenen Zucker-Monomeren aufgebaut sind. Hemicellulose ist im Wesentlichen aus verschiedenen Zucker-Monomeren, wie beispielsweise Glucose, Xylose, Arabinose, Galactose und Mannose, aufgebaut, wobei die Zucker Acetyl- sowie Methylsubstituierte Gruppen aufweisen können. Sie besitzen eine zufällige, amorphe Struktur und sind gut hydrolysierbar. Xylose bzw. Arabinose bestehen zum überwiegenden Teil aus Zucker-Monomeren mit fünf Kohlenstoffatomen (Pentosen). Mannose bzw. Galactose bestehen hauptsächlich aus Zucker-Monomeren mit sechs Kohlenstoffatomen (Hexosen). "Lignine" sind amorphe, unregelmäßig verzweigte aromatische Makromoleküle, welche in der Natur als Bestandteil von Zellwänden vorkommen und dort die Verholzung (Lignifizierung) der Zelle bewirken. Sie sind aus substituierten Phenylpropanol-Einheiten aufgebaut, zeigen einen lipophilen Charakter und sind bei Zimmertemperatur in neutralen Lösemitteln, wie beispielsweise Wasser, unlöslich. Vorläufersubstanzen von Lignin sind beispielsweise p-Coumaryl-Alkohol, Coniferyl-Alkohol und Sinapyl-Alkohol. Die Molmassen von Lignin liegen üblicherweise zwischen 10000 und 20000 g/mol.

Das cellulosehaltiges und/oder lignocellulosehaltiges Material können Partikel, Fasern oder Material sein, die dieses enthalten. Die lignocellulosehaltigen Fasern sind vorzugsweise Holzfasern. Diese Holzfasern können durch Zerfaserung von Holzpartikeln, Holzfasern, Hackschnitzel oder feinteiligem Holzmaterial hergestellt werden. Bevorzugte Holzarten für die Herstellung einer durch das erfindungsgemäße Verfahren erhältlichen Faserplatte sind beispielsweise Nadelhölzer, insbesondere Kiefer- und/oder Fichtenholz. Die cellulosehaltigen Materialen können Holz sein, aus Holz oder cellulosehaltigen Pflanzen stammen.

Das Imprägnatträgermaterial des erfindungsgemäßen Imprägnats ist bevorzugt ausgewählt aus der Gruppe bestehend aus Papier, Vlies, Glasvlies, Faservlies, Gewirke, Dekorpapier, Overlaypapier, Karton, Regeneratpapier, Kernkarton, Pappe und Halbzellstoffen.

Unter "Papier" wird ein flächiger Werkstoff mit zwei Hauptseiten, d.h. einer Oberseite und einer Unterseite, die von den vier Seitenkanten abzugrenzen sind, verstanden, der im Wesentlichen aus cellulosehaltigen Fasern meist pflanzlicher Herkunft besteht und durch Entwässerung einer Fasersuspension auf einem Sieb gebildet wird. Das dabei entstehende Faservlies wird verdichtet und getrocknet. Papier wird in der Regel aus Zellstoff oder aus Holzstoff (aus Holzschliff) oder auch aus Altpapier hergestellt. Ein "Halbzellstoff' ist ein Rohstoff für die Papierherstellung, der aus Holz hergestellt wird und vor allem aus Cellulose und Anteilen von Lignin besteht. Er stellt eine Zwischenstufe zwischen Zellstoff und Holzstoff dar. Je nach flächenbezogener Masse (sogenanntes Flächengewicht) und Eigenschaften wird zwischen Papier (7 g/m² bis 225 g/m²), Karton (150 g/m² bis 600 g/m²) oder Pappe (ab 225 g/m²) unterschieden. Diese Unterscheidung kann nach DIN 6730 vorgenommen werden. Insbesondere sind Papiere, Pappe und/oder Karton saugfähige Imprägnatträgermaterialien. Diese sind vorzugsweise in der Lage, bis zum 7-fachen ihres Trockengewichts der Imprägnierharz-Zusammensetzung aufzunehmen. Ein Dekorpapier ist ein bedrucktes oder gefärbtes Spezialpapier, das zur dekorativen Beschichtung von Holzwerkstoffen verwendet werden kann. Ein Overlaypapier ist in der Regel ein mindestens teilweise bis gänzlich transparentes (dünnes) Papier, welches beispielsweise bei einem Laminatpaneel den Blick auf das darunter liegende Dekorpapier oder Imprägnatträgermaterial ermöglicht. Overlay und/oder Dekorpapiere werden in der Praxis häufig in Form von Imprägnaten als fertiges einzelnes oder miteinander kombiniertes Produkt bereitgestellt.

Ein weiterer Gegenstand der Erfindung ist ein Laminat, enthaltend
iii. mindestens ein Laminatträgermaterial, und
iv. die erfindungsgemäße Harzbeschichtung

"Laminat", wie hier verwendet, bezeichnet ein Erzeugnis, das mindestens zwei flächig miteinander verbundene Schichten umfasst. Diese mindestens zwei Schichten können aus gleichen oder unterschiedlichen Materialien bestehen. In der Regel besteht eine dieser Schichten aus einem Laminatträgermaterial iii) auf welches das die erfindungsgemäße Harzbeschichtung iv) als zweite Schicht aufgebracht worden ist.

Laminate werden vielseitig im Hausbau, insbesondere im Innenausbau, sowie im Möbelbau eingesetzt, beispielsweise als Wandelement für den Außen- oder Innenbereich, als Laminatfußböden oder für Vorder- und Rückfronten von Möbeln. Die dafür eingesetzten Laminate sind in der Regel aus mindestens zwei Schichten bestehende, quaderförmige Flachprodukte, welche durch sechs Oberflächen definiert sind: Vier Kantenflächen sowie eine Ober- und Unterseite, wobei die Oberseite und die Unterseite hier zusammen und in Abgrenzung zu den Kantenflächen als "Hauptseiten" oder "Oberflächen des Laminats" bezeichnet werden. Mit der Oberseite ist die beim Innenausbau nach Innen gerichtete Seite gemeint. Bei Laminaten, die als Fußbodenpanelen verwendet werden, bedeutet damit "Oberseite" die Seite, die vom Benutzer nach Verbau der Laminatpaneele betreten und betrachtet wird. Damit grenzt sich die "Oberseite" von der "Unterseite" ab, welche beim Innenausbau auf dem Unterbau oder Boden liegt.

An die Deckschicht von Laminaten werden hohe Anforderungen hinsichtlich der optischen oder die Optik beeinflussenden Eigenschaften gestellt. Hierzu zählen beispielsweise Abriebfestigkeit, Härte, Transparenz, Glanz, Farbechtheit und Lichtbeständigkeit. Die oberste Schicht von Laminaten ("Deckschicht") ist vielfach so ausgestaltet, dass sie einen Blick auf das darunter liegende Dekorpapier (wenn vorhanden) oder Laminatträgermaterial ermöglicht, also hochtransparent ist, aber dennoch ausreichend hart und abriebfest ist. Überraschenderweise genügt das erfindungsgemäße Laminat diesen Anforderungen. In praktischen Versuchen hat sich gezeigt, dass das erfindungsgemäße Laminat eine hervorragende Beständigkeit und langhaltende antimikrobielle Wirkung aufweist. Dies war überraschend, da nicht vorherzusehen war, dass sich trotz des Einpolymerisierens der polymeren Guanidin-Verbindung zum einen eine beständige, kratzfeste Oberflächenbeschichtung ausbildet, und zum anderen die antimikrobielle Wirkung erhalten bleibt. Ferner wurde auch gefunden, dass wenn das erfindungsgemäße Laminat im Möbelbau oder als Fußbodenbelag eingesetzt wird, es den hohen alltäglichen Beanspruchungen standhält. Insbesondere weist die oberste Schicht des Laminats eine hohe Mikrokratzbeständigkeit auf und behält trotz der alltäglichen Beanspruchungen seine sehr hohe Transparenz und Lichtechtheit bei, so dass der gewünschte Blick auf das darunterliegende Dekor- oder Laminatträgermaterial freigehalten wird.

Die erfindungsgemäßen Laminate weisen einen schichtweisen Aufbau auf, wobei bezogen auf den Innenausbau, üblicherweise die oberste Schicht aus dem erfindungsgemäßen Imprägnat hergestellt ist. Hierbei bildet die Schicht i) des Imprägnats die oberste Schicht des Laminats. Diese oberste Schicht wird hier auch als "Deckschicht" bezeichnet Diese Deckschicht hat die Funktion, der hohen äußeren Beanspruchung standzuhalten und trotzdem durch sehr hohe Transparenz und Lichtechtheit den Blick auf das darunterliegende Dekor- oder Laminatträgermaterial freizugeben. Da das Laminat aus u.a dem erfindungsgemäßen Imprägnat oder die erfindungsgemäße Harzbeschichtung aufweist, enthält die Deckschicht eine Beschichtung, die aus der erfindungsgemäßen Imprägnierharz-Zusammensetzung oder die erfindungsgemäße Harzbeschichtung aufweist oder ganz daraus besteht. Insbesondere kann es sich bei der Deckschicht um die Harzbeschichtung in Form eines Flüssig-Overlays oder in Form eines Melamin-Formaldehyd Lacks handeln. Unter der Deckschicht kann insbesondere ein Dekorpapier vorhanden sein, welches ebenfalls die ganz- oder teilweise ausgehärtete erfindungsgemäße Imprägnierharz-Zusammensetzung enthalten kann. hergestellt ist

Als weitere Schicht weisen erfindungsgemäße Laminate ein Laminatträgermaterial iii) auf, auf dessen Oberseite das erfindungsgemäße Imprägnat aufgebracht ist. Als weitere Schicht können erfindungsgemäße Laminate, insbesondere unterseitig zum Laminatträgermaterial, einen sogenannten Gegenzug bzw. Gegenzugsschicht aufweisen. Der Gegenzug bzw. die Gegenzugschicht ist dazu da, dass sich das Laminat bei Belastung durch die auftretenden Biegekräfte nicht verformt. Der Gegenzug bzw. die Gegenzugschicht kann beispielsweise in Form eines Papiers oder einer Kunststoffschicht vorliegen.

Das erfindungsgemäße Laminat umfasst mindestens ein Laminatträgermaterial. Das Laminatträgermaterial enthält vorzugsweise cellulosehaltiges und/oder lignocellulosehaltiges Material.

Das mindestens eine Laminatträgermaterial kann hierbei ausgewählt sein aus der Gruppe bestehend aus Papier, Pappe, Dekorpapier, Karton, Kernkarton, Halbzellstoffe, Vlies, Faservlies, Gewirke, Holz, Holzwerkstoffe und Vollholzplatten. Denkbar und üblich ist ferner, dass das Laminatträgermaterial Kombinationen mehrerer der vorgenannten Materialien enthält.

Gemäß einer Ausführungsform handelt es sich bei dem Laminatträgermaterial um eine Holzwerkstoffplatte. Das Laminatträgermaterial kann ein Holzwerkstoff sein. Bevorzugte Holzwerkstoffe sind Holzspanwerkstoffe oder Faserplatten. Wenn hier oder an anderer Stelle von "Platte" die Rede ist, dann ist damit ein quaderförmiges Flachprodukt gemeint, welches durch sechs Oberflächen definiert ist: Vier Kantenflächen sowie eine Ober- und Unterseite, wobei die Oberseite und die Unterseite hier zusammen und in Abgrenzung zu den Kantenflächen als "Hauptseiten" oder "Oberflächen der Platte" bezeichnet werden. Als Laminatträgermaterial können aber auch ein oder mehrere Imprägnate bzw. mit Imprägnierharz imprägnierte, getränkte oder beschichtete Papierbahnen in erfindungsgemäßen Laminaten eingesetzt werden.

Unter dem Begriff "Holzwerkstoff werden erfindungsgemäß verschiedenste Werkstoffe verstanden, die aus Holz bestehen oder Holz enthalten. Beispiele für Holzwerkstoffe im Sinne der Erfindung sind Holzplatten, Laminate, Bodenbeläge, Arbeitsplatten, Tischplatten, Paletten und/oder Holzformteile, insbesondere Verbundwerkstoffe aus einzelnen Holzpartikeln. Solche Holzpartikel bzw. Strukturelemente können jegliche Zerkleinerungsprodukte von Cellulose enthaltenden Materialien sein, wie beispielsweise Holzpartikel, insbesondere Holzspäne, feinteiliges Holzmaterial, Holzstrands, Holzfasern, Hackschnitzel und/oder Holzfurniere. Holzwerkstoffe im Sinne dieser Erfindung sind insbesondere solche auf Vollholzbasis, Furnierwerkstoffe, Spanwerkstoffe, Faserwerkstoffe, Faserplatten oder andere Verbundwerkstoffe. Eine allgemeine Übersicht über die Produktgruppe der Holzwerkstoffe findet sich beispielsweise in "Taschenbuch der Holztechnik", A. Wagenführ, F. Scholz, Carl Hanser Verlag, 2. Auflage, 2012 auf den Seiten 128 bis 130.

In einer Ausführungsform kann es sich bei dem Laminatträgermaterial um eine Holzfaserplatte handeln. Unterschiedliche Typen von Faserplatten sind dem Fachmann bekannt. Diese sind beispielsweise im "Taschenbuch der Holztechnik" von A. Wagenführ und F. Scholz, Hanser Verlag, 2012, auf den Seiten 146 bis 149 beschrieben. Holzspanwerkstoffe (Spanplatten im weiteren Sinne) bezeichnet eine Produktgruppe im Bereich der Holzwerkstoffe, die aus Holzpartikeln und einem Bindemittel mittels Wärme und Druck hergestellt werden. Beispiele hierfür sind Spanplatten, Flachpressplatten, Einschichtplatten, Mehrschichtplatten, leichte Flachpressplatten, Strangpressplatten, Strangpressröhrenplatten (ET - Extruded Tubular), Strangpressvollplatten (ES - Extruded Solid), kunststoffbeschichtete dekorative Flachpressplatten (MFB - Melamin Faced Board), Spanholzformteile oder Grobspanplatten (OSB - Oriented Strand Board). Die Einteilung der Spanplatten kann nach DIN EN 312 erfolgen, wobei sich die Spanplatten in Festigkeit und Feuchtebeständigkeit unterscheiden können. OSB können gemäß ihrer Verwendung nach EN 300 eingeteilt werden. Solche Holzspanwerkstoffe können beispielsweise zu Laminaten, Bodenbelägen, Arbeitsplatten, Tischplatten, Paletten und/oder Holzformteilen weiterverarbeitet werden. Holzspanwerkstoffe, ihre Herstellung und Anforderungen an diese sind auch in "Taschenbuch der Holztechnik", A. Wagenführ, F. Scholz, Carl Hanser Verlag, 2. Auflage, 2012 auf den Seiten 143 bis 146 beschrieben.

In einer anderen Ausführungsform kann das Laminatträgermaterial auch eine Holzfaserplatte, wie beispielsweise eine mitteldichte (MDF) oder hochdichte (HDF) Faserplatte sein. Im Gegensatz zu den Holzspanwerkstoffen wird zur Herstellung der Faserplatten das verwendete Holz bis hin zur Holzfaser, Faserbündeln oder Faserbruchstücken aufgeschlossen. Der strukturelle Zusammenhalt der Faserplatten beruht im Wesentlichen auf der Verfilzung der Holzfasern und ihren holzeigenen Bindekräften, es können aber auch Klebstoffe als Bindemittel eingesetzt werden. Die Faser wird aus verholztem Pflanzenmaterial erzeugt. Dies erfolgt durch Hacken des Rohmaterials, anschließendes Dämpfen, Kochen und chemisches und/oder mechanisches Aufschließen bis hin zur Einzelfaser, Faserbündel oder Faserbruchstücken. Bei dem Herstellungsverfahren unterscheidet der Fachmann zwischen dem Nassverfahren (Sedimentieren der Fasern aus einer wässrigen Fasersuspension zum Vlies) und dem Trockenverfahren (trockene Fasern werden mechanisch oder pneumatisch zu einem Vlies verdichtet). Werden die Holzfaserplatten im Nassverfahren hergestellt, unterscheidet man poröse, mittelharte und harte Faserplatten. Werden die Holzfaserplatten im Trockenverfahren hergestellt, unterscheidet man mitteldichte und hochdichte Faserplatten, außerdem gehören in diese Gruppe auch gipsgebundenen Faserplatten. Die entstandenen Matten werden anschließend verpresst. Das Verpressen, wie hier verwendet, erfolgt üblicherweise durch Heißverpressen der Schichten zum Laminat, bei dem die noch nicht vollständig ausgehärtete erfindungsgemäße Zusammensetzung dann weiter kondensiert bzw. aushärtet. Besonders bevorzugt ist die für das Laminat eingesetzte Faserplatte eine DHF, LDF-, MDF-, oder HDF-Platte. Unter DHF-Platte versteht der Fachmann eine diffusionsoffene und feuchtebeständige Holzfaserplatte. Unter LDF-, MDF- und HDF-Platte versteht der Fachmann eine Holzfaserplatte niedriger ("Low Density"), mittlerer ("Medium Density") und hoher ("High Density") Dichte. Holzfaserplatten im LDF-Bereich besitzen eine Dichte von 250 bis 450 kg/m³, im MDF-Bereich von 550 bis 750 kg/m³ und im HDF-Bereich von 800 bis 1000 kg/m³.

In einer besonders bevorzugten Ausführungsform ist die Faserplatte eine DHF-Platte. Vorzugsweise entspricht die erfindungsgemäße DHF-Platte der Norm EN 14964:2007-01.

In einer Ausführungsform der Erfindung beträgt die Rohdichte der Faserplatte 500 bis 700 kg/m³, bevorzugt 550 bis 650 kg/m³ und insbesondere bevorzugt 580 bis 625 kg/m³. Die Rohdichte kann gemäß EN 323:93-08 bestimmt werden.

In einer weiteren Ausführungsform weist die Faserplatte eine Dicke von 8 bis 30 mm, bevorzugt von 10 bis 22 mm und insbesondere bevorzugt von 12 bis 20 mm auf.

In einer Ausführungsform der Erfindung beträgt die Rohdichte der Spanplatte 500 bis 780 kg/m³, bevorzugt 550 bis 650 kg/m³ und insbesondere bevorzugt 580 bis 625 kg/m³. Die Rohdichte kann gemäß EN 323:93-08 bestimmt werden.

In einer weiteren Ausführungsform weist die Faserplatte eine Dicke von 8 bis 40 mm, bevorzugt von 10 bis 32 mm und insbesondere bevorzugt von 12 bis 25 mm auf.

In einer weiteren Ausführungsform weist die Faser- oder Spanplatte bzw. das spätere Laminat mindestens ein form- oder kraftschlüssiges Verbindungselement auf, insbesondere eine Nut und/oder Feder. Dafür kann mindestens eine der Kantenflächen derart ausgestaltet sein, dass diese mit einer anderen Kantenfläche einer anderen Platte verbunden werden kann. Vorzugsweise ist die Verbindung eine Nut-Feder-Verbindung oder Spundung. Besonders bevorzugt ist, wenn die Nut, Feder und/oder Spundung rund, oval, konisch oder eckig ausgebildet ist. Vorzugsweise ist die Verbindung zwischen den Platten formschlüssig. Besonders bevorzugt ist die Verbindung formschlüssig, senkrecht zur Plattenebene.

Dem Fachmann sind solche Nut-Feder-Verbindungen oder Spundungen grundsätzlich bekannt. Unter Nut-Feder-Verbindung oder Spundung werden Verbindungen verstanden, die an ihren Kantenflächen oder Rändern zusammengesteckt oder ineinandergelegt werden können. Bei der Nut-Feder-Verbindung können die beiden zu verbindenden Platten an den Kantenflächen oder Rändern je eine Nut aufweisen, in die als verbindendes drittes Bauteil eine sogenannte Feder eingesteckt oder eingelegt wird. Es ist aber auch denkbar, dass bei den zusammenzusteckenden Platten die eine Kantenfläche oder Rand mindestens eine Nut und die andere Kantenfläche oder Rand mindestens eine Feder aufweist. In einer besonderen Ausführungsform weist die Faserplatte an mindestens einer Kantenfläche eine Nut und an mindestens einer anderen Kantenfläche eine Feder auf. Bei der Spundung kann eine Feder in halber Breite an den Rand eines der beiden zu verbindenden Bauteile eingearbeitet sein.

In einer weiteren Ausführungsform ist das Laminat ein Holzwerkstoff, der direkt mit der Harzbeschichtung beschichtet ist. In einer anderen Ausführungsform ist das Laminat ein Holzwerkstoff, der mit mindestens einem Imprägnat verpresst ist. Insbesondere kann das Imprägnat ein imprägniertes Dekorpapier sein. Alternativ oder zusätzlich können die genannten Ausführungsformen auch eine separat aufgetragene Außenschicht aufweisen (sogenannte Overlay- oder Finish-Schicht), welche die erfindungsgemäße Harzbeschichtung enthält.

Gemäß einer anderen Ausführungsform der Erfindung ist das Laminat ein Schichtstoff, der aus u.a dem erfindungsgemäßen Imprägnat und einer und bevorzugt mehrerer, mit Imprägnierharz, insbesondere mit der Imprägnierharz-Zusammensetzung, getränkten Papierschichten, hergestellt ist, die unter Hochdruck zusammengefügt wurden. Ein solcher Schichtstoff, der aus mehreren, insbesondere mit der Imprägnierharz-Zusammensetzung, getränkte Papierschichten hergestellt wurde und eine Dicke von 2 mm oder mehr aufweist, wird hier als Kompaktplatte bezeichnet. Alternativ oder zusätzlich kann der Schichtstoff auch eine separat aufgetragene Außenschicht aufweisen (sogenannte Overlay- oder Finish-Schicht), welche die erfindungsgemäße Harzbeschichtung enthält. Zu den Schichstoffen im Sinne dieser Erfindung zählen neben den Kompaktplatten insbesondere auch HPL ("High Pressure Laminate") und CPL ("Continuous Pressing Laminates") Schichtstoffe.

Gemäß einer weiteren Ausführungsform des erfindungsgemäßen Laminats handelt es sich um ein Laminatbodenpaneel, welches z.B. im Fußbodenbereich eingesetzt wird, und welches auf der Oberseite die erfindungsgemäße Harzbeschichtung aufweist. Bevorzugt umfasst dieses Laminatpaneel als Laminatträgermaterial eine Holzwerkstoffplatte, insbesondere eine Holzfaserplatte, auf die ein erfindungsgemäßes Imprägnat bei der Herstellung wurde aufgebracht ist. Für das Laminatträgermaterial und das Imprägnat gilt das bereits oben Gesagte. Bevorzugt ist die Holzwerkstoffplatte eine Span-, MDF- oder HDF-Platte. Bevorzugt ist das Imprägnat ein imprägniertes Dekorpapier. Laminate in Form eines Fußbodenpaneels können insbesondere den folgenden Schichtaufbau aufweisen (die Reihenfolge ergibt sich aus einer Betrachtung ausgehend von der Oberseite): 1. die erfindungsgemäße Harzbeschichtung, insbesondere in Form eines Melamin-Formaldehyd Lacks oder Flüssigoverlays oder , 2. Optionales Dekorpapier, 3. Optionales Underlay, 4. Trägermaterial (bspw. eine Trägerplatte), 5. Optionaler Gegenzug und 6. optionale Verlegeunterlage.

In dieser Ausführungsform als Fußbodenpaneel ist, bezogen auf die typischen Laminatbödenpaneele, das Dekorpapier typischerweise die optisch wahrgenommene Oberfläche, auf der z.B. Motive aufgedruckt sein können. Auf diesem Dekorpapier befindet sich die transparente Harzbeschichtung. Es ist jedoch auch möglich, direkt das Laminatträgermaterial oder darauf liegende Schichten zu bedrucken und auf diese die Harzbeschichtung aufzutragen. Erfindungsgemäße Laminate können optional ein Underlay (z.B. ein sogenanntes Kraftpapier) aufweisen. Vorzugsweise befindet sich dieses unterhalb der Dekorpapierlage. Ein Underlay wird z.B. in der Regel bei Laminatbödenpaneelen hoher Beanspruchungsklassen verwendet. Die Beanspruchungsklassen der Laminatfußböden werden beispielsweise in der EN 13329 geregelt. Laminatböden der niedrigeren Beanspruchungsklassen nutzen in der Regel kein Underlay. Underlays können ebenfalls mit der erfindungsgemäßen Imprägnierharz-Zusammensetzung imprägniert, getränkt oder beschichtet sein. Gemäß dieser Ausführungsform der Erfindung weisen die Laminate auch auf ihrer Unterseite eine erhöhte Widerstandsfähigkeit sowie antimikrobielle Eigenschaften auf.

So weist beispielsweise ein typisches, als Fußbodenpaneel zum Einsatz kommendes Laminat mindestens die folgenden Schichten auf: Gegenzugpapier, (Träger-)Holzwerkstoffplatte, Dekorpapier und mit einem Imprägnierharz imprägniertes Overlaypapier und/oder eine oberflächliche Harzbeschichtung.

Die Verlegeunterlage kann insbesondere eine elastische Verlegeunterlage sein. Diese kann unter den Gegenzug bzw. die Gegenzugschicht und/oder unterseitig zum Laminatträgermaterial aufgebracht sein. In Frage kommen hier beispielsweise Korkschichten zum Geh- und/oder Trittschallschutz, sowie Unterlagsmatten aus Polystyrol, Polyethylen, Polypropylen, Polyurethanschäumen oder Cellulosefasern.

Die Herstellung solcher Laminatpaneele als Fußbodenbelag oder Laminaten für den Möbelbau sind dem Fachmann allgemein bekannt. Hierbei wird das Dekor- und/oder Overlaypapier meist vorher in einem separaten Schritt mit dem Imprägnierharz imprägniert, getränkt oder beschichtet, und anschließend getrocknet. In langen Bahnen aufgerollt ist dieses Imprägnat als Vorprodukt lagerfähig. Anschließend wird auf die Oberseite des Laminatträgermaterials, insbesondere der (Träger-)Holzwerkstoffplatte, das Dekor- und/oder Overlaypapier enthaltende Imprägnat aufgelegt. Für diesen Arbeitsschritt werden meistens Laser zum Ausrichten der Imprägnate genutzt, damit beim späteren Verlegen keine Abweichungen im Dekorbild auftreten. Es ist aber auch denkbar, dass das Laminatträgermaterial, insbesondere die (Träger-)Holzwerkstoffplatte, anstatt mit einem Dekor- und/oder Overlaypapier nur mit einem Flüssig-Overlay beschichtet wird. Meistens gleichzeitig mit dem Aufbringen des das Dekor- und/oder Overlaypapier enthaltenden Imprägnats wird ein Gegenzug bzw. eine Gegenzugschicht auf der Unterseite des des Laminatträgermaterials, insbesondere der (Träger-)Holzwerkstoffplatte, aufgebracht. Optional können bei der Herstellung von beispielsweise Fußbodenpaneelen oder Laminaten für die Möbelherstellung in einem weiteren Arbeitsgang in die Kanten der Laminatpaneele Nut und Feder bzw. mit mehreren Fräsköpfen Profile eingefräst werden, welche zum späteren Verbinden der einzelnen Fußbodenpaneele oder Möbelteile genutzt werden können.

Bei Laminaten für die Möbelherstellung kann das Laminatträgermaterial, insbesondere die Holzwerkstoffplatte oder die Vollholzplatte oder der Schichtstoff, auf seinen Hauptseiten und optional auch an seinen Kanten mit einer erfindungsgemäßen Harzbeschichtung beschichtet werden. In diesen Ausführungsformen kann es sich bei der erfindungsgemäßen Harzbeschichtung insbesondere um eine Meiamin-Formaldehyd-Lackschicht handeln. Wie weiter oben beschrieben, kann die erfindungsgemäße Zusammensetzung bzw. die daraus erhältliche Harzbeschichtung auch als antimikrobiell wirkende Lackschicht fungieren. Hierzu kann die erfindungsgemäße Zusammensetzung bzw. die erfindungsgemäße Harzbeschichtung dem Fachmann aus der Melamin-Formaldehyd-Lackherstellung bekannte Zusatzstoffe enthalten. Insbesondere kann die erfindungsgemäße Zusammensetzung bzw. die erfindungsgemäße Harzbeschichtung Farbpigmente enthalten.

Gegenstand der Erfindung ist ferner ein Verfahren zur Herstellung eines Laminats, umfassend die folgenden Schritte
i. Aufbringen d eines erfindungsgemäßen Imprägnats auf ein Laminatträgermaterial, und
ii. Verpressen der Komponenten aus Schritt i.

Das Aufbringen eines Imprägnats in Schritt i) kann durch die in der holz- und papierverabeitenden Industrie gängigen Methoden vorgenommen werden. Das Aufbringen des Imprägnats kann durch Auflegen des Imprägnats auf das Laminatträgermaterial erfolgen.

Es ist auch denkbar, dass sich zwischen dem Imprägnat und dem Laminatträgermaterial mindestens eine der bereits oben näher erläuterten weiteren Schichten befindet. Hierfür gilt das bereits oben Gesagte.

Das Verpressen der Komponenten aus Schritt i) in Schritt ii) kann durch die in der holz- und papierverabeitenden Industrie gängigen Methoden vorgenommen werden.

Hierbei werden typischerweise die zumindest zwei Schichten durch Verpressen unter erhöhtem Druck und/oder erhöhter Temperatur verbunden. Dabei verflüssigt sich die Imprägnierharz-Zusammensetzung oder die Harzbeschichtung kurzzeitig und reagiert sodann im Wege einer Polykondensation zum fertigen und dauerhaft mit der weiteren Schicht verbundenen Laminat.

Vor dem Verpressen wird das Imprägnat auf eine bestimmte Restfeuchte, bevorzugt auf 2 bis 8 Gew.-%, besonders bevorzugt auf 4 bis 6 Gew.-% getrocknet.

Geeignete Temperaturen für das Verpressen sind Temperaturen von 150 °C bis 250 °C, bevorzugt von 160 °C bis 240 °C, insbesondere bevorzugt von 180 °C bis 230 °C. Bei Temperaturen in diesen Bereichen kann das Verfahren besonders wirtschaftlich durchgeführt werden. Optimale Ergebnisse können erzielt werden, wenn das Verpressen bei einer Presstemperatur von mindestens etwa 150 °C durchgeführt wird.

Die Pressgeschwindigkeit beim Heißpressen auf kontinuierlichen Doppelbandpressen beträgt vorzugsweise 400 mm/s, bevorzugt 450 mm/s und insbesondere bevorzugt 500 mm/s.

Aus ökonomischen und verfahrenstechnischen Gründen hat es sich als vorteilhaft erwiesen, wenn beim Verpressen ein spezifischer Pressdruck (aktiver Druck auf der Plattenoberfläche) von 50 bis 300 N/cm², verwendet wird. Derartige Drücke stellen eine besonders gute Verklebung der Schichten des Laminats miteinander sicher. Zudem kann mit einem solchen Pressdruck eine hohe Festigkeit des Laminats erreicht werden.

In einer Ausführungsform der Erfindung weist das Verfahren den zusätzlichen Schritt iii) Entfetten mindestens einer der Oberflächen des Laminats auf.

Bevorzugt handelt es sich bei der Oberfläche des Laminats die entfettet wird, um die Oberfläche, welche die erfindungsgemäße Harzbeschichtung enthält.

Überraschend wurde gefunden, dass eine Entfettung der Oberfläche im Zuge der Herstellung eines erfindungsgemäßen Laminats zu einer weiteren Verbesserung der antimikrobiellen Eigenschaften führt.

Möglichkeiten zur Entfettung von Oberflächen sind dem Fachmann allgemein bekannt. Dies kann beispielsweise durch Behandlung mit einem Reinigungsmittel erfolgen, welches hydrophobe Substanzen wie Fette lösen kann. Das Reinigungsmittel kann ein organisches Lösungsmittel enthalten oder hieraus bestehen. Insbesondere können die Oberflächen mit einem organischen Lösungsmittel in Berührung gebracht und dann abgerieben werden.

Bevorzugte organische Lösungsmittel sind ausgewählt aus der Gruppe bestehend aus Alkoholen, Ethern, Aldehyden und Ketonen. In der Praxis wurden beispielsweise mit Ethanol, Isopropanol, deren Ether oder Aceton als Lösungsmittel gute Ergebnisse bei der Entfettung der Oberfläche in Schritt iii) erzielt.

Nachfolgend wird die Erfindung beispielhaft anhand von Ausführungsbeispielen näher beschrieben.

### Beispiel 1: Herstellung einer Imprägnierharz-Zusammensetzung

In diesem Beispiel wurde eine Imprägnierharz-Züsammensetzung im Sinne der Erfindung wie folgt hergestellt:

### Materialien:

| | |
|---|---|
| 2780 g | Melamin-Formaldehyd-Tränkharz 62 % Festharzgehalt |
| 345 g | PHMG-HCl 25 % wässrige Lösung |
| 14,5 g | Härter MH836 Fa. INEOS Melamines |
| 5,0 g | nichtionisches Netzmittel Deurowet MA 21 |
| 2,5 g | nichtionisches Trennmittel Deurolease PHE |

Die oben angegebenen Materialien wurden in einem 51-Dreihalskolben bei 25 °C unter Rühren miteinander vermengt und 15 Minuten innig gemischt.

Die Zusammensetzung hatte einen Feststoffgehalt von 57,9 Gew.-%, bestimmt nach der Trockenschrankmethode (1 g Einwaage 2 h bei 120 °C trocknen) und eine Trübungszeit von 160 s bei 100 °C im siedenden Wasserbad.

### Beispiel 2: Herstellung eines Imprägnats

Im Folgenden wurde ein Imprägnat mit der Imprägnierharz-Zusammensetzung aus Beispiel 1 hergestellt.

Ein Dekorpapier mit einer Grammatur von 65 g/m² wurde mit 65 g/m² der Imprägnierharz-Zusammensetzung aus Beispiel 1 per Handrakelgerät der Firma CHM GmbH Automatisierungstechnik beharzt. Im Anschluss an die Beharzung wurde das Imprägnat bei 120 °C im Umluftofen 3 Minuten getrocknet. Die Restfeuchte des Imprägnats betrug 6 Gew.-%.

### Beispiel 3: Herstellung eines Laminats

Das Imprägnat aus Beispiel 2 wurde auf einer 7.4 mm HDF-Trägerplatte (50x50 cm) bei 192 °C unter einem Druck von 60 bar innerhalb von 23 s verpresst. Ein Gegenzugpapier wurde unterseitig zur Trägerplatte zur Sicherstellung der Planlage angebracht.

### Beispiel 4: Antimikrobielle Wirkung des Laminats aus Beispiel 3

Die Überprüfung der antimikrobiellen Wirksamkeit erfolgt typischerweise anhand von *in-vitro* Tests. Da jedes Material von sich aus unterschiedliche Eigenschaften hinsichtlich der Anhaftung von Keimen besitzt, wird die antimikrobielle Wirksamkeit immer als Differenz im Vergleich zu einer entsprechenden nicht-antimikrobiellen so genannten Nullprobe gemessen. Verbreitete Testmethoden sind JIS Z 2801 (ISO 22196), ASTM E 2180 und der Certika-Test.

Zur Prüfung der antimikrobiellen Wirksamkeit im vorliegenden Fall wurden Laminatmuster aus Beispiel 3 nach der Trockeninokulationsmethode (Rodac-Methode) gemäß der Mikrobiologischen Qualitätsstandard 22 der untersucht und mit einer wirkstofffreien Referenz verglichen.

### Rodac-Methode für diverse Oberflächen

### Material:

- Testoberflächen
- Testkeim: S. *aureus* ATCC 6538
- steriles Wasser (Aqua dest.)
- Ethanol 70%, 96%
- reines Aceton
- Einmaltücher
- sterile Tupferstäbchen
- Densicheck Plus (Fa. bioMerieux)
- Drigalskispatel
- Pipetten
- sterile Pipettenspitzen
- Columbia-Agar + 5% Schafsblut Agarplatten (90 mm)
- Columbia-Agar + 5% Schafsblut Abklatschplatten (Fa. Oxoid)

BD Columbia III Agar mit 5 % Schafsblut ist ein nährstoffreiches Mehrzweckmedium zur Isolierung und Kultivierung von nicht anspruchsvollen und anspruchsvollen Mikroorganismen aus klinischen Proben. Die hervorragenden Wachstumsunterstützenden Eigenschaften von Columbia-Agar mit 5% Schafsblut leiten sich aus der Kombination von zwei Peptonen und Hefeextrakt als Quelle des Vitamin-B-Komplexes ab. Die ebenfalls enthaltene Maisstärke absorbiert toxische Nebenprodukte der Probe und dient als Energiequelle für Organismen mit alpha-Amylase. Das Schafblut dient dem Nachweis von Hämolysereaktionen und liefert den Faktor X (Häm), der für das Wachstum zahlreicher pathogener Spezies erforderlich ist. Auf diesem Medium sind die Kolonien größer und das Wachstum ist ausgeprägter als auf anderen Blutagar-Medien. In vielen europäischen Ländern ist BD Columbia III Agar mit 5 % Schafsblut das meistverwendete Erstisolierungsmedium für klinische Proben.

Reagenzien des gebrauchsfähigen Plattenmediums (Zusammensetzung pro Liter destilliertem Wasser, pH 7,3 ± 0,2)

| | |
|---|---|
| Pankreatisch abgebautes Casein | 12,0 g |
| Peptisch abgebautes Tiergewebe | 5,0 g |
| Hefeextrakt | 3,0 g |
| Rindfleischextrakt | 3,0 g |
| Maisstärke | 1,0 g |
| Natriumchlorid | 5,0 g |
| Agar | 13,5 g |
| Wachstumsfaktoren | 4,0 g |
| Defibriniertes Schafsblut | 5,0 % |

### Inokulum:

Von der Agarplatte wird von einer 24 h S. *aureus* Kultur mit Hilfe eines sterilen Tupferstäbchens etwas Material entnommen und eine Suspension in 10 ml sterilem A. dest. hergestellt. Die Dichte der Suspension wird anhand des Gerätes "Densicheck lus" (bioMerieux) auf eine Trübung nach McFarland von 0,5 (entspricht einer Dichte von 1,5 × 10^8KBE/ml) eingestellt. Anschließend wird die Suspension mittels einem 1:1000 Verdünnungsschritt auf 10^5 KBE/ml mit sterilem Aqua dest. verdünnt (Testinokulum). Die Kontrolle des Inokulums erfolgt durch Ausplattieren von 10 µl und 100 µl Inokulum auf Blutagarplatte (KBE werden hochgerechnet).

### Testoberflächen:

Die Testoberflächen werden jeweils in 2 Abschnitte eingeteilt. Vor Kontamination der Flächen wird ein Abschnitt jeweils mit sterilem Aqua dest., mit 70% Ethanol behandelt (durch wischen mit Einmaltuch). Anschließend werden die Testbereiche mit Kreisen markiert. Auf jeden Abschnitt werden jeweils auf 3 markierten Stellen 10 µl des Testinokulums pipettiert. Die Tropfen werden anschließend mit Hilfe eines Drigalskispatels auf der markierten Fläche ausplattiert.

### Inkubation und Auswertung

Nach jedem Ausplattieren wird der Drigalskispatel in 96%igem Alkohol eingetaucht und abgeflammt. Nach Auftrocknung der Suspension bei Raumtemperatur (10 min., im Laminar Flow) erfolgt ein Oberflächenabklatsch der markierten Stelle mittels Columbia-Schafblut 5%- Agar Abklatschplatte (andrücken der Abklatschplatte für 5 Sekunden) sofort nach Auftrocknung (0h), nach 3h und nach 5h.

Die Abklatschplatten werden bei 35± 2°C für 24h inkubiert (ohne feuchte Kammer) und anschließend durch Auszählen der Kolonien befundet bzw. eine visuelle Beurteilung des Bewuchses durchgeführt.

**Tabelle 1: Koloniebildende Einheiten (KBE) S. aureus ATCC 6538 nach 24 h Inkubation bei 35±2 °C der Proben. Probenahme erfolgte nach 0 h, 1 h, und 3 h Kontaktzeit des Keimes mit der Testoberfläche (St. = Referenz) und PHMG (Muster aus Beispiel 3). KBE = Koloniebildende Einheiten.**

| ***S. aureus* KBE/10 µL** | | |
|---|---|---|
| **Zeit (in Stunden, h)** | **St. (Referenz)** | **PHMG (Muster aus Beispiel 3)** |
| 0 | Mehr als 10⁴ | Weniger als als 10³ |
| 1 | Mehr als 10³ | 109 |
| 3 | 840 | 90 |

Bei dem mit PHMG behandelten Laminat zeigt sich eine sehr deutliche Keimreduktion von anfänglich weniger als 10³ koloniebildenden Einheiten auf nur 90 koloniebildende Einheiten.

**Tabelle 2: Koloniebildende Einheiten (KBE) E. coli nach 24 h Inkubation bei 35±2 °C der Proben. Probenahme erfolgte nach 0 h, 1 h, und 3 h Kontaktzeit des Keimes mit der Testoberfläche (St. = Referenz) und PHMG (Muster aus Beispiel 3). KBE = Koloniebildende Einheiten.**

| ***E. coli* KBE/10 µL** | | |
|---|---|---|
| **Zeit (in Stunden, h)** | **St. (Referenz)** | **PHMG (Muster aus Beispiel 3)** |
| 0 | Mehr als 10⁴ | Mehr als 10⁴ |
| 1 | Mehr als 10³ | Mehr als 10³ |
| 3 | Mehr als 10³ | 108 |

Bei dem mit PHMG behandelten Laminat zeigt sich eine sehr deutliche Keimreduktion von anfänglich mehr als 10⁴ koloniebildenden Einheiten auf nur 108 koloniebildende Einheiten.

## Patentansprüche

1. Imprägnierharz-Zusammensetzung enthaltend
a) ein Melamin-Formaldehyd-Harz,
b) ein nichtionisches Netzmittel,
c) ein nichtionisches Trennmittel,
d) einen Härter, und
e) Polyhexamethylenguanidin (PHMG).

2. Imprägnierharz-Zusammensetzung nach Anspruch 1, wobei die Imprägnierharz-Zusammensetzung höchstens 0,05 Gew.-% anionische Netzmittel und/oder höchstens 0,05 Gew.-% anionische Trennmittel, jeweils bezogen auf den Festharzanteil des Melamin-Formaldehyd-Harzes, oder wobei die Imprägnierharz-Zusammensetzung kein anionisches Netzmittel und/oder kein anionisches Trennmittel enthält.

3. Imprägnierharz-Zusammensetzung nach einem der Ansprüche 1 oder 2, **dadurch gekennzeichnet, dass** das Polyhexamethylenguanidin (PHMG) als Salz, insbesondere als wasserlösliches Salz vorliegt.

4. Imprägnierharz-Zusammensetzung nach einem der Ansprüche 1 bis 3, **dadurch gekennzeichnet, dass**
i. das nichtionische Netzmittel ausgewählt ist aus der Gruppe, bestehend aus Polyalkylenglycolether, Alkylpolyglucosiden und Nonylphenolethoxylaten und Fettalkoholethoxylaten und deren Mischungen;
ii. das nichtionische Trennmittel ausgewählt ist aus der Gruppe, bestehend aus Fettsäureglyceriden, ethoxylierten Fettalkoholen und höheren Fettsäurephosphatestem und deren Mischungen; und/oder
iii. der Härter ausgewählt ist aus der Gruppe, bestehend aus para-Toluolsulfonsäure, Morpholin, para-Toluolsulfonsäure-Morpholinsalze, Alkylaminsalze, Ammonium-Salze, Morpholin-p-Toluolsulfonat, Ethanolamin-Hydrochlorid und deren Mischungen.

5. Imprägnierharz-Zusammensetzung nach einem der Ansprüche 1 bis 4, **dadurch gekennzeichnet, dass** die Imprägnierharz-Zusammensetzung eine oder mehrere der Komponenten a) bis e) in den folgenden Mengen enthält:
a) das Melamin-Formaldehyd-Harz in einer Menge von 25 bis 60 Gew.-%, bezogen auf das Gesamtgewicht der Imprägnierharz-Zusammensetzung;
b) das nichtionische Netzmittel in einer Menge von 0,1 bis 3 Gew.-%, bevorzugt von 0,2 bis 1,0 Gew.-% und insbesondere bevorzugt von 0,2 bis 0,4 Gew.-%, bezogen auf den Festharzanteil des Melamin-Formaldehyd-Harzes;
c) das nichtionische Trennmittel in einer Menge von 0,1 bis 1,0 Gew.-%, bevorzugt von 0,2 bis 0,5 Gew.-% und insbesondere bevorzugt von 0,2 bis 0,4 Gew.-%, bezogen auf den Festharzanteil des Melamin-Formaldehyd-Harzes:
d) den Härter in einer Menge von 0,1 bis 1,0 Gew.-%, bevorzugt von 0,3 bis 0,8 Gew.-% und insbesondere bevorzugt von 0,5 bis 0,6 Gew.-%, bezogen auf den Festharzanteil des Melamin-Formaldehyd-Harzes; und/oder
e) Polyhexamethylenguanidin (PHMG) in einer Menge von 0,01 bis 10 Gew.-%, bevorzugt von 1,0 bis 5,0 Gew.-% und insbesondere bevorzugt von 1,0 bis 3,0 Gew.-%, bezogen auf den Festharzanteil des Melamin-Formaldehyd-Harzes.

6. Harzbeschichtung erhältlich durch Kondensation einer Imprägnierharz-Zusammensetzung nach einem der Ansprüche 1 bis 5.

7. Harzbeschichtung nach Anspruch 6 enthaltend ein Co-Kondensat aus dem Melamin-Formaldehyd-Harz und Polyhexamethylenguanidin (PHMG).

8. Harzbeschichtung nach Anspruch 6 oder 7, **dadurch gekennzeichnet, dass** die Harzbeschichtung eine Dicke von 0,01 bis 2 mm, bevorzugt von 0,05 bis 1 mm und insbesondere bevorzugt von 0,1 bis 0,3 mm aufweist.

9. Imprägnat, enthaltend
i. eine Imprägnierharz-Zusammensetzung nach einem der Ansprüche 1 bis 5 , und
ii. mindestens ein Imprägnatträgermaterial.

10. Imprägnat nach Anspruch 9, **dadurch gekennzeichnet, dass** das Imprägnat die Imprägnierharz-Zusammensetzung nach einem der Ansprüche 1 bis 5 in einer Menge von
i. 30 bis 600 Gew.-%, 350 bis 550 Gew.-% oder 100 bis 180 Gew.-%, jeweils bezogen auf das Trockengewicht des Imprägnats, und/oder
ii. 10 g/m² bis 250 g/m², bevorzugt 50 g/m² bis 150 g/m² und insbesondere bevorzugt 80 g/m² bis 120 g/m², jeweils bezogen auf eine der beiden
Oberflächen des Imprägnats, enthält.

11. Imprägnat nach Anspruch 9 oder 10, **dadurch gekennzeichnet, dass** das mindestens eine Imprägnatträgermaterial ausgewählt ist, aus der Gruppe, bestehend aus Papier, Vlies, Glasvlies, Faservlies, Gewirke, Dekorpapier, Overlaypapier, Karton, Regeneratpapier, Kernkarton, Pappe und Halbzellstoffen.

12. Laminat, enthaltend
iii. mindestens ein Laminatträgermaterial, und
iv. eine Harzbeschichtung nach einem der Ansprüche 6 bis 8

13. Laminat nach Anspruch 12, **dadurch gekennzeichnet, dass** das mindestens eine Laminatträgermaterial ausgewählt ist, aus der Gruppe, bestehend aus Papier, Vlies, Faservlies, Gewirke, Dekorpapier, Karton, Kernkarton, Pappe, Halbzellstoffe, Holz, Holzwerkstoffen und Vollholzplatten oder eine Kombination hiervon enthält.

14. Laminat nach einem der Ansprüche 12 oder 13 für den Möbel-, Boden-, Wand-und/oder Deckenbau, **dadurch gekennzeichnet, dass** die, Oberfläche des Laminats, die zum Zimmerinneren gerichtet ist, die Harzbeschichtung nach einem der Ansprüche 6 bis 8 enthält.

15. Verfahren zur Herstellung eines Laminats nach einem der Ansprüche 12 bis 14, umfassend die folgenden Schritte
i. Aufbringen
des Imprägnats nach einem der Ansprüche 9 bis 11,
auf ein Laminatträgermaterial
ii. Verpressen der Komponenten aus Schritt i.

16. Verfahren zur Herstellung eines Laminats nach Anspruch 15, ferner umfassend den Schritt
iii. Entfetten mindestens einer der Oberflächen des Laminats.

17. Verwendung einer Imprägnierharz-Zusammensetzung nach einem der Ansprüche 1 bis 5 in der Holzwerkstoff, Imprägnat- und/oder Laminatherstellung oder Verwendung einer Harzbeschichtung nach einem der Ansprüche 6 bis 8 in der Holzwerkstoff-und/oder Laminatherstellung.

## Claims

1. Impregnating resin composition containing
a) a melamine-formaldehyde resin,
b) a nonionic wetting agent,
c) a nonionic release agent,
d) a curing agent, and
e) polyhexamethylene guanidine (PHMG).

2. Impregnating resin composition according to claim 1, wherein the impregnating resin composition contains at most 0.05 wt.% anionic wetting agents and/or at most 0.05 wt.% anionic release agents, in each case based on the solid resin content of the melamine-formaldehyde resin, or wherein the impregnating resin composition contains no anionic wetting agent and/or no anionic release agent.

3. Impregnating resin composition according to any of claims 1 or 2, **characterized in that** the polyhexamethylene guanidine (PHMG) is present as a salt, in particular as a water-soluble salt.

4. Impregnating resin composition according to any of claims 1 to 3, **characterized in that**
i. the nonionic wetting agent is selected from the group consisting of polyalkylene glycol ethers, alkyl polyglucosides and nonylphenol ethoxylates and fatty alcohol ethoxylates and mixtures thereof;
ii. the nonionic release agent is selected from the group consisting of fatty acid glycerides, ethoxylated fatty alcohols and higher fatty acid phosphate esters and mixtures thereof; and/or
iii. the curing agent is selected from the group consisting of para-toluenesulfonic acid, morpholine, para-toluenesulfonic acid morpholine salts, alkylamine salts, ammonium salts, morpholine-p-toluenesulfonate, ethanolamine hydrochloride and mixtures thereof.

5. Impregnating resin composition according to any of claims 1 to 4, **characterized in that** the impregnating resin composition contains one or more of components a) to e) in the following amounts:
a) the melamine-formaldehyde resin in an amount of from 25 to 60 wt.%, based on the total weight of the impregnating resin composition;
b) the nonionic wetting agent in an amount of from 0.1 to 3 wt.%, preferably from 0.2 to 1.0 wt.% and particularly preferably from 0.2 to 0.4 wt.%, based on the solid resin content of the melamine-formaldehyde resin;
c) the nonionic release agent in an amount of from 0.1 to 1.0 wt.%, preferably from 0.2 to 0.5 wt.% and particularly preferably from 0.2 to 0.4 wt.%, based on the solid resin content of the melamine-formaldehyde resin;
d) the curing agent in an amount of from 0.1 to 1.0 wt.%, preferably from 0.3 to 0.8 wt.% and particularly preferably from 0.5 to 0.6 wt.%, based on the solid resin content of the melamine-formaldehyde resin; and/or
e) polyhexamethylene guanidine (PHMG) in an amount of from 0.01 to 10 wt.%, preferably from 1.0 to 5.0 wt.% and particularly preferably from 1.0 to 3.0 wt.%, based on the solid resin content of the melamine-formaldehyde resin.

6. Resin coating obtainable by condensing an impregnating resin composition according to any of claims 1 to 5.

7. Resin coating according to claim 6, containing a co-condensate of the melamine-formaldehyde resin and polyhexamethylene guanidine (PHMG).

8. Resin coating according to either claim 6 or claim 7, **characterized in that** the resin coating has a thickness of 0.01 to 2 mm, preferably 0.05 to 1 mm and particularly preferably 0.1 to 0.3 mm.

9. Impregnate containing
i. an impregnating resin composition according to any of claims 1 to 5, and
ii. at least one impregnate carrier material.

10. Impregnate according to claim 9, **characterized in that** the impregnate contains the impregnating resin composition according to any of claims 1 to 5 in an amount of
i. from 30 to 600 wt.%, 350 to 550 wt.% or 100 to 180 wt.%, in each case based on the dry weight of the impregnate, and/or
ii. from 10 g/m² to 250 g/m², preferably 50 g/m² to 150 g/m² and particularly preferably 80 g/m² to 120 g/m², in each case based on one of the two surfaces of the impregnate.

11. Impregnate according to either claim 9 or claim 10, **characterized in that** the at least one impregnate carrier material is selected from the group consisting of paper, nonwoven fabric, glass mat, fiber mat, knitted fabrics, decorative paper, overlay paper, cardboard, regenerated paper, core cardboard, paperboard and semi-chemical pulps.

12. Laminate containing
iii. at least one laminate carrier material, and
iv. a resin coating according to any of claims 6 to 8.

13. Laminate according to claim 12, **characterized in that** the at least one laminate carrier material is selected from the group consisting of paper, nonwoven fabric, fiber mat, knitted fabrics, decorative paper, cardboard, core cardboard, paperboard, semi-chemical pulps, wood, wood-based materials and solid wood panels, or a combination thereof.

14. Laminate according to either claim 12 or claim 13 for furniture, floor, wall and/or ceiling construction, **characterized in that** the surface of the laminate, which is directed towards the interior of the room, contains the resin coating according to any of claims 6 to 8.

15. Method for producing a laminate according to any of claims 12 to 14, comprising the following steps
i. applying the impregnate according to any of claims 9 to 11 to a laminate carrier material
ii. compressing the components from step i.

16. Method for producing a laminate according to claim 15, further comprising the step of iii. degreasing at least one of the surfaces of the laminate.

17. Use of an impregnating resin composition according to any of claims 1 to 5 in the manufacture of wood material, impregnate and/or laminate or the use of a resin coating according to any of claims 6 to 8 in the manufacture of wood material and/or laminate.

## Revendications

1. Composition de résine d'imprégnation contenant
a) une résine mélamine-formaldéhyde,
b) un agent mouillant non ionique,
c) un agent de séparation non ionique,
d) un durcisseur, et
e) de la polyhexaméthylène guanidine (PHMG).

2. Composition de résine d'imprégnation selon la revendication 1, où la composition de résine d'imprégnation contient au plus 0,05 % en poids d'agent mouillant anionique et/ou au plus 0,05 % en poids d'agent de séparation anionique, respectivement rapporté à la teneur en résine solide de la résine mélamine-formaldéhyde, ou où la composition de résine d'imprégnation ne contient pas d'agent mouillant anionique et/ou d'agent de séparation anionique.

3. Composition de résine d'imprégnation selon l'une des revendications 1 ou 2, **caractérisée en ce que** la polyhexaméthylène guanidine (PHMG) est présente sous forme de sel, en particulier sous forme de sel hydrosoluble.

4. Composition de résine d'imprégnation selon l'une quelconque des revendications 1 à 3,
**caractérisée en ce que**
i. l'agent mouillant non ionique est choisi dans le groupe constitué par les éthers de polyalkylène glycol, les polyglucosides d'alkyle et les éthoxylates de nonylphénol et les éthoxylates d'alcool gras, et leurs mélanges ;
ii. l'agent de séparation non ionique est choisi dans le groupe constitué par les glycérides d'acide gras, les alcools gras éthoxylés et les esters de phosphate d'acide gras supérieurs, et leurs mélanges ; et/ou
iii. le durcisseur est choisi dans le groupe constitué par l'acide para-toluènesulfonique, la morpholine, les sels d'acide para-toluènesulfonique-morpholine, les sels d'alkylamine, les sels d'ammonium, la morpholine-p-toluènesulfonate, le chlorhydrate d'éthanolamine et leurs mélanges.

5. Composition de résine d'imprégnation selon l'une quelconque des revendications 1 à 4, **caractérisée en ce que** la composition de résine d'imprégnation contient au moins un composant a) à e) en quantités suivantes :
a) la résine mélamine-formaldéhyde en une quantité de 25 à 60 % en poids, rapporté au poids total de la composition de résine d'imprégnation ;
b) l'agent mouillant non ionique en une quantité de 0,1 à 3 % en poids, de préférence de 0,2 à 1,0 % en poids et de manière particulièrement préférée de 0,2 à 0,4 % en poids, rapporté à la teneur en résine solide de la résine mélamine-formaldéhyde ;
c) l'agent de séparation non ionique en une quantité de 0,1 à 1,0 % en poids, de préférence de 0,2 à 0,5 % en poids et de manière particulièrement préférée de 0,2 à 0,4 % en poids, rapporté à la teneur en résine solide de la résine mélamine-formaldéhyde ;
d) le durcisseur en une quantité de 0,1 à 1,0 % en poids, de préférence de 0,3 à 0,8 % en poids et de manière particulièrement préférée de 0,5 à 0,6 % en poids, rapporté à la teneur en résine solide de la résine mélamine-formaldéhyde ; et/ou
e) la polyhexaméthylène guanidine (PHMG) en une quantité de 0,01 à 10 % en poids, de préférence de 1,0 à 5,0 % en poids et de manière particulièrement préférée de 1,0 à 3,0 % en poids, rapporté à la teneur en résine solide de la résine mélamine-formaldéhyde.

6. Revêtement en résine obtenu par condensation d'une composition de résine d'imprégnation selon l'une quelconque des revendications 1 à 5.

7. Revêtement en résine selon la revendication 6, contenant un co-condensat de la résine mélamine-formaldéhyde et de polyhexaméthylène guanidine (PHMG).

8. Revêtement en résine selon la revendication 6 ou 7, **caractérisé en ce que** le revêtement en résine présente une épaisseur de 0,01 à 2 mm, de préférence de 0,05 à 1 mm et de manière particulièrement préférée de 0,1 à 0,3 mm.

9. Produit d'imprégnation, contenant
i. une composition de résine d'imprégnation selon l'une quelconque des revendications 1 à 5, et
ii. au moins un substrat de produit d'imprégnation.

10. Produit d'imprégnation selon la revendication 9, **caractérisé en ce que** ledit produit d'imprégnation contient la composition de résine d'imprégnation selon l'une quelconque des revendications 1 à 5 en une quantité
i. de 30 à 600 % en poids, de 350 à 550 % en poids ou de 100 à 180 % en poids, respectivement rapporté au poids sec du produit d'imprégnation, et/ou
ii. de 10 g/m² à 250 g/m², de préférence de 50 g/m² à 150 g/m² et de manière particulièrement préférée de 80 g/m² à 120 g/m², respectivement rapporté à l'une des deux surfaces du produit d'imprégnation.

11. Produit d'imprégnation selon la revendication 9 ou 10, **caractérisé en ce que** l'au moins un substrat de produit d'imprégnation est choisi dans le groupe constitué par
le papier, le non-tissé, le non-tissé de verre, le non-tissé de fibres, la bonneterie, le papier décoratif, le papier de recouvrement, le carton, le papier régénéré, l'âme en carton, le carton-pâte et la pâte mi-chimique.

12. Stratifié, contenant
iii. au moins un substrat de stratifié, et
iv. un revêtement en résine selon l'une quelconque des revendications 6 à 8.

13. Stratifié selon la revendication 12, **caractérisé en ce que** l'au moins un substrat de stratifié est choisi dans le groupe constitué par le papier, le non-tissé, le non-tissé en fibres, la bonneterie, le papier décoratif, le carton, l'âme en carton, le carton-pâte, la pâte mi-chimique, le bois, les matériaux dérivés du bois et les panneaux en bois massif, ou contient une combinaison de ceux-ci.

14. Stratifié selon l'une des revendications 12 ou 13 pour la construction de meubles, de planchers, de parois et/ou de plafonds, **caractérisé en ce que** la surface du stratifié, laquelle est dirigée vers l'intérieur de la pièce, contient le revêtement en résine selon l'une quelconque des revendications 6 à 8.

15. Procédé de fabrication d'un stratifié selon l'une quelconque des revendications 12 à 14, comprenant les étapes suivantes
i. l'application du produit d'imprégnation selon l'une quelconque des revendications 9 à 11, sur un substrat de stratifié
ii. la compression des composantes de l'étape i.

16. Procédé de fabrication d'un stratifié selon la revendication 15, comprenant en outre l'étape suivante
iii. le dégraissage de l'au moins une des surfaces du stratifié.

17. Utilisation d'une composition de résine d'imprégnation selon l'une quelconque des revendications 1 à 5 dans la fabrication de matériau dérivé du bois, de produit d'imprégnation et/ou de stratifié ou utilisation d'un revêtement en résine selon l'une quelconque des revendications 6 à 8 dans la fabrication de matériau dérivé du bois et/ou de stratifié.
